(19) Europäisches Patentamt European Patent Office Office européen des brevets

(11) **EP 4 512 629 A1**

(12) **EUROPEAN PATENT APPLICATION**
published in accordance with Art. 153(4) EPC

(43) Date of publication:
26.02.2025 Bulletin 2025/09

(21) Application number: 23791635.8

(22) Date of filing: 29.03.2023

(51) International Patent Classification (IPC):
*B41M 5/00* (2006.01)  *B41J 2/01* (2006.01)
*B41J 2/21* (2006.01)  *C09D 11/322* (2014.01)

(52) Cooperative Patent Classification (CPC):
B41J 2/01; B41J 2/21; B41M 5/00; C09D 11/322

(86) International application number:
PCT/JP2023/013018

(87) International publication number:
WO 2023/203983 (26.10.2023 Gazette 2023/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.04.2022 JP 2022069381

(71) Applicant: FUJIFILM Corporation
Tokyo 106-8620 (JP)

(72) Inventors:
• SATO, Ayato
  Ashigarakami-gun, Kanagawa 258-8577 (JP)
• ASANO, Yuji
  Ashigarakami-gun, Kanagawa 258-8577 (JP)
• IKOSHI, Masao
  Ashigarakami-gun, Kanagawa 258-8577 (JP)

(74) Representative: Klunker IP
Patentanwälte PartG mbB
Destouchesstraße 68
80796 München (DE)

(54) **IMAGE RECORDING METHOD**

(57) Provided is an image recording method including an ink applying step of applying an ink containing water, a pigment, and a resin onto a non-permeable substrate by an inkjet method, an ink drying step of drying the ink applied onto the non-permeable substrate to obtain an ink film, and a step of transporting, by a transport member T, the non-permeable substrate provided with the ink film in a disposition in which the transport member T and the ink film are in contact with each other, in which an absolute value of a difference between a hydrogen bonding component of a surface energy of the ink film and a hydrogen bonding component of a surface energy of the transport member T is 2.0 mN/m or more.

**FIG. 1**

Processed by Luminess, 75001 PARIS (FR)

**Description**

**BACKGROUND OF THE INVENTION**

1. Field of the Invention

The present disclosure relates to an image recording method.

2. Description of the Related Art

In the related art, various studies have been made on an image recording method (also referred to as a printing method).

For example, JP2013-49519A discloses, as a printing method for preventing transport stains caused by a transport member and improving ink resistance of the transport member, a printing method of printing, on a recording medium, an ink that a total surface free energy γ calculated from a theoretical expression of Kaelble-Uy is 25 to 30 mN/m and a dispersion component ratio γdr represented by the following expression 1 is 0.55 to 0.75, and of transporting the recording medium a transport member facing at least a printed surface of the printed recording medium, in which the transport member has a total surface free energy γ calculated from a theoretical expression of Kaelble-Uy of 20 mN/m or less, and has a dispersion component ratio γdr represented by the following expression 1 of 0.75 to 1.00.

$$\gamma dr = \gamma d/\gamma \;\ldots\; \text{Expression 1}$$

(in the expression 1, γdr is a dispersion component ratio, γd is a surface free energy of the dispersion component, and γ is a total surface free energy)

**SUMMARY OF THE INVENTION**

However, in an image recording method in which a non-permeable substrate provided with an ink film by applying and drying an ink is transported by a transport member in a disposition in which the transport member and the ink film are in contact with each other, there may be a case in which it is required to further suppress transfer of the ink film to the transport member.

The present disclosure has been made in view of such circumstances, and an object of the present disclosure is to provide an image recording method capable of suppressing transfer of an ink film to a transport member in an image recording method including transporting a non-permeable substrate provided with the ink film by applying and drying an ink, in a state in which the transport member and the ink film are in contact with each other.

The present disclosure includes the following aspects.

<1> An image recording method comprising:

an ink applying step of applying an ink containing water, a pigment, and a resin onto a non-permeable substrate by an ink jet method;
an ink drying step of drying the ink applied onto the non-permeable substrate to obtain an ink film; and
a step of transporting, by a transport member T, the non-permeable substrate provided with the ink film in a disposition in which the transport member T and the ink film are in contact with each other,
in which an absolute value of a difference between a hydrogen bonding component of a surface energy of the ink film and a hydrogen bonding component of a surface energy of the transport member T is 2.0 mN/m or more.

<2> The image recording method according to <1>,
in which the absolute value of the difference between the hydrogen bonding component of the surface energy of the ink film and the hydrogen bonding component of the surface energy of the transport member T is 10.0 mN/m or more and 30.0 mN/m or less.
<3> The image recording method according to <1> or <2>,
in which an absolute value of a difference between a dispersion component of the surface energy of the ink film and a dispersion component of the surface energy of the transport member T is 5.0 mN/m or more and 30.0 mN/m or less.
<4> The image recording method according to any one of <1> to <3>,
in which an absolute value of a difference between a surface roughness of the ink film and a surface roughness of the transport member T is 10.0 μm or less.

<5> The image recording method according to any one of <1> to <4>,
in which the ink is a white ink containing water, a white pigment, and a resin.
<6> The image recording method according to any one of <1> to <5>,

in which the ink applying step is a step of applying, onto the non-permeable substrate, a first ink containing water, a pigment, and a resin and a second ink containing water, a pigment, and a resin by an ink jet method in a superimposed manner in this order,
the ink drying step is a step of drying the first ink and the second ink applied onto the non-permeable substrate to obtain an ink film,
the first ink is a colored ink containing water, a coloring pigment, and a resin, and
the second ink is a white ink containing water, a white pigment, and a resin.

<7> The image recording method according to any one of <1> to <6>, further comprising, before the ink applying step:

a pretreatment liquid applying step of applying a pretreatment liquid containing water, a coagulating agent, and a resin onto the non-permeable substrate;
a pretreatment liquid drying step of drying the pretreatment liquid applied onto the non-permeable substrate to obtain a pretreatment liquid film; and
a step of transporting, by a transport member P, the non-permeable substrate provided with the pretreatment liquid film in a disposition in which the transport member P and the pretreatment liquid film are in contact with each other,
in which an absolute value of a difference between a dispersion component of a surface energy of the pretreatment liquid film and a dispersion component of a surface energy of the transport member P is 5.0 mN/m or more.

<8> An image recording method comprising:

a first ink applying step of applying a first ink containing water, a pigment, and a resin onto a non-permeable substrate by an ink jet method;
a first ink drying step of drying the first ink applied onto the non-permeable substrate to obtain a first ink film;
a first transporting step of transporting, by a transport member T1, the non-permeable substrate provided with the first ink film in a disposition in which the transport member T1 and the first ink film are in contact with each other;
a second ink applying step of applying a second ink containing water, a pigment, and a resin onto the first ink film on the non-permeable substrate which has been transported by the transport member T1, by an ink jet method;
a second ink drying step of drying the second ink applied onto the first ink film on the non-permeable substrate to obtain a second ink film; and
a second transporting step of transporting, by a transport member T2, the non-permeable substrate provided with the second ink film in a disposition in which the transport member T2 and the second ink film are in contact with each other,
in which an absolute value of a difference between a hydrogen bonding component of a surface energy of the first ink film and a hydrogen bonding component of a surface energy of the transport member T1 is 2.0 mN/m or more,
an absolute value of a difference between a hydrogen bonding component of a surface energy of the second ink film and a hydrogen bonding component of a surface energy of the transport member T2 is 2.0 mN/m or more,
the first ink is a colored ink containing water, a coloring pigment, and a resin, and
the second ink is a white ink containing water, a white pigment, and a resin.

<9> The image recording method according to <8>,

in which the absolute value of the difference of the hydrogen bonding component of the surface energy of the first ink film and the hydrogen bonding component of the surface energy of the transport member T1 is 10.0 mN/m or more and 30.0 mN/m or less, and
the absolute value of the difference of the hydrogen bonding component of the surface energy of the second ink film and the hydrogen bonding component of the surface energy of the transport member T2 is 10.0 mN/m or more and 30.0 mN/m or less.

<10> The image recording method according to <8> or <9>,

in which an absolute value of a difference of a dispersion component of the surface energy of the first ink film and a dispersion component of the surface energy of the transport member T1 is 5.0 mN/m or more and 30.0 mN/m or less, and
an absolute value of a difference of a dispersion component of the surface energy of the second ink film and a dispersion component of the surface energy of the transport member T2 is 5.0 mN/m or more and 30.0 mN/m or less.

<11> The image recording method according to any one of <8> to <10>,

in which an absolute value of a difference between a surface roughness of the first ink film and a surface roughness of the transport member T1 is 10.0 $\mu$m or less, and
an absolute value of a difference between a surface roughness of the second ink film and a surface roughness of the transport member T2 is 10.0 $\mu$m or less.

<12> The image recording method according to any one of <8> to <11>, further comprising, before the first ink applying step:

a pretreatment liquid applying step of applying a pretreatment liquid containing water, a coagulating agent, and a resin onto the non-permeable substrate;
a pretreatment liquid drying step of drying the pretreatment liquid applied onto the non-permeable substrate to obtain a pretreatment liquid film; and
a step of transporting, by a transport member **P,** the non-permeable substrate provided with the pretreatment liquid film in a disposition in which the transport member P and the pretreatment liquid film are in contact with each other,
in which an absolute value of a difference between a dispersion component of a surface energy of the pretreatment liquid film and a dispersion component of a surface energy of the transport member P is 5.0 mN/m or more.

According to the embodiment the present disclosure, there is provided an image recording method capable of suppressing transfer of an ink film to a transport member in an image recording method including transporting a non-permeable substrate provided with the ink film by applying and drying an ink, in a state in which the transport member and the ink film are in contact with each other.

## BRIEF DESCRIPTION OF THE DRAWINGS

Fig. 1 is a diagram conceptually showing a first specific example of an image recording apparatus used in an image recording method according to the present disclosure.
Fig. 2 is a diagram conceptually showing a second specific example of an image recording apparatus used in an image recording method according to the present disclosure.

## DESCRIPTION OF THE PREFERRED EMBODIMENTS

In the present disclosure, the numerical ranges shown using "to" means ranges including the numerical values described before and after "to" as the minimum value and the maximum value.
In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.
In the present disclosure, in a case in which a plurality of substances corresponding to respective components in a composition are present, the amount of the respective components in the composition means the total amount of the plurality of substances present in the composition unless otherwise specified.
In the present disclosure, a combination of two or more preferred aspects is a more preferred aspect.
In the present disclosure, the meaning of the term "step" includes not only an independent step but also a step whose intended purpose is achieved even in a case in which the step is not clearly distinguished from other steps.
In the present disclosure, "image" means an ink film itself in a case where a pretreatment liquid is not used, and means a laminated film of a pretreatment liquid film and an ink film in a case where the pretreatment liquid is used.

In the present disclosure, "image recording" means formation of the image.

The concept of "image" in the present disclosure also includes a solid image.

In the present disclosure, a description of "applying an ink onto a substrate" includes an aspect of directly applying the ink onto a surface of the substrate, and for example, in a case where a layer A is formed on the substrate, an aspect of directly applying the ink onto a surface of the layer A.

In the present disclosure, unless otherwise specified, "upstream side" means an upstream side of a non-permeable substrate in a transport direction, unless otherwise specified, and "downstream side" means a downstream side of a non-permeable substrate in the transport direction.

[Image recording method]

The image recording method (hereinafter, also referred to as "recording method") according to the present disclosure includes an ink applying step of applying an ink containing water, a pigment, and a resin onto a non-permeable substrate by an inkjet method, an ink drying step of drying the ink applied onto the non-permeable substrate to obtain an ink film, and a step of transporting, by a transport member T, the non-permeable substrate provided with the ink film in a disposition in which the transport member T and the ink film are in contact with each other, in which an absolute value of a difference between a hydrogen bonding component of a surface energy of the ink film and a hydrogen bonding component of a surface energy of the transport member T is 2.0 mN/m or more. The recording method according to the present disclosure may include other steps, as necessary.

With the recording method according to the present disclosure, it is possible to transfer an ink film to a transport member in an image recording method including transporting a non-permeable substrate provided with the ink film by applying and drying an ink, in a state in which the transport member and the ink film are in contact with each other.

Such an effect is exhibited by the absolute value of the difference between the hydrogen bonding component of the surface energy of the ink film and the hydrogen bonding component of the surface energy of the transport member T (hereinafter, also referred to as "difference in hydrogen bonding component between the ink film and the transport member T") being 2.0 mN/m or more.

<First specific example of image recording apparatus>

Hereinafter, a first specific example of an image recording apparatus used in the image recording method according to the present disclosure will be described with reference to the accompanying drawing.

In the drawing and description of the present disclosure, substantially the same elements (for example, components or parts) may be designated by the same reference numerals, and redundant description thereof may be omitted.

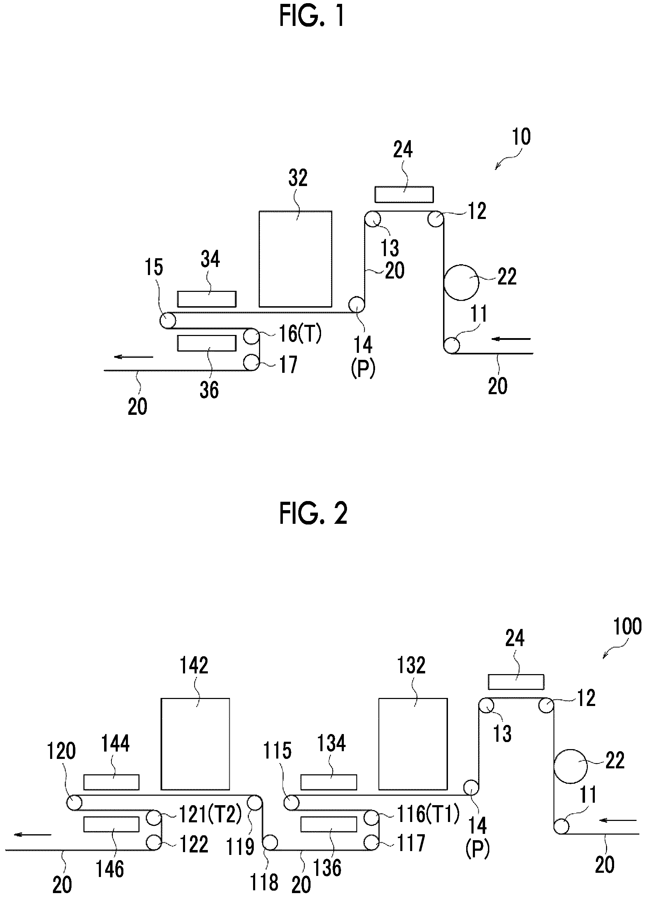

Fig. 1 is a diagram conceptually showing the first specific example of the image recording apparatus used in the image recording method according to the present disclosure.

As shown in Fig. 1, an image recording apparatus 10 which is the image recording apparatus according to the first specific example includes transport rollers 11 to 17 as transport members for transporting a non-permeable substrate 20.

The image recording apparatus 10 includes, in order from an upstream side in the transport direction along the transport direction of the non-permeable substrate 20, a pretreatment liquid applying device 22 for applying a pretreatment liquid onto the non-permeable substrate 20; a pretreatment liquid drying device 24 for drying the pretreatment liquid applied onto the non-permeable substrate 20; an ink jet head 32 for applying an ink onto the non-permeable substrate 20 by an ink jet method; and ink drying devices 34 and 36 for drying the ink applied onto the non-permeable substrate 20 to obtain an ink film.

In the image recording apparatus 10, the non-permeable substrate 20 is transported in a direction of an arrow in Fig. 1 by the transport rollers 11 to 17.

The non-permeable substrate 20 to be transported is subjected to application of the pretreatment liquid by the pretreatment liquid applying device 22, drying of the pretreatment liquid by the pretreatment liquid drying device 24, application of the ink by the ink jet head 32, and drying of the ink by the ink drying devices 34 and 36, in this order.

In the present disclosure, the treatment in this order means that the application of the pretreatment liquid, the drying of the pretreatment liquid, the application of the ink, and the drying of the ink are performed in this order with respect to a certain point X on the non-permeable substrate to be transported.

As the pretreatment liquid, a pretreatment liquid containing water, a coagulating agent, and a resin is used.

A preferred aspect of the pretreatment liquid will be described later.

As the ink, an ink containing water, a pigment, and a resin is used.

A preferred aspect of the ink will be described later.

Each of the transport rollers 11 to 17 as the transport members for transporting the non-permeable substrate 20 transports the non-permeable substrate 20 while being in contact with an application surface of the pretreatment liquid and the ink (hereinafter, also simply referred to as "application surface") or a non-application surface of the pretreatment liquid and the ink (hereinafter, also simply referred to as "non-application surface") in the non-permeable substrate 20.

In the image recording apparatus 10 according to the first specific example, first, the non-permeable substrate 20 is transported by the transport roller 11, and then the pretreatment liquid is applied onto the non-permeable substrate 20 by the pretreatment liquid applying device 22. The non-permeable substrate 20 to which the pretreatment liquid has been applied is transported by the transport roller 12. The pretreatment liquid on the transported non-permeable substrate 20 is dried by the pretreatment liquid drying device 24, and a pretreatment liquid film is obtained on the non-permeable substrate 20.

The non-permeable substrate 20 provided with the pretreatment liquid film is transported by the transport roller 13 which is in contact with the non-application surface, and then is transported by the transport roller 14 as a transport member P which is in contact with the application surface, in a state in which the transport member P and the pretreatment liquid film are in contact with each other.

In the first specific example, an absolute value of a difference between a hydrogen bonding component of a surface energy of the pretreatment liquid film and a hydrogen bonding component of a surface energy of the transport roller 14 as the transport member P is adjusted to be 2.0 or more (more preferably 10.0 or more and 30.0 or less).

In the first specific example, it is preferable that an absolute value of a difference between a dispersion component of the surface energy of the pretreatment liquid film and a dispersion component of the surface energy of the transport member P is adjusted to be 5.0 or more and 30.0 or less.

The absolute value of the difference between the hydrogen bonding component of the surface energy of the pretreatment liquid film and the hydrogen bonding component of the surface energy of the transport roller 14 as the transport member P, and the absolute value of the difference between the dispersion component of the surface energy of the pretreatment liquid film and the dispersion component of the surface energy of the transport roller 14 as the transport member P can be adjusted, for example, by adjusting composition of the pretreatment liquid for obtaining the pretreatment liquid film, drying conditions of the pretreatment liquid for obtaining the pretreatment liquid film, a material of the surface (surface in contact with the pretreatment liquid film) of the transport roller 14, and the like.

The non-permeable substrate 20 provided with the pretreatment liquid film is transported to below the ink jet head 32 by the above-described transport roller 14 (that is, the transport member P).

By the ink jet head 32, the ink is applied onto the pretreatment liquid film on the non-permeable substrate 20, which has reached below the ink jet head 32.

The ink applied onto the pretreatment liquid film on the non-permeable substrate 20 is dried by the ink drying devices 34 and 36 to form an ink film.

The non-permeable substrate 20 provided with the ink film is transported by the transport roller 16 as a transport member T, which is disposed on the downstream side of the ink drying device 36 (that is, the downstream side of the non-permeable substrate 20 in the transport direction), in a disposition in which the transport member T (that is, the transport roller 16) and the ink film are in contact with each other.

In the first specific example, the absolute value of the difference between the hydrogen bonding component of the surface energy of the ink film and the hydrogen bonding component of the surface energy of the transport roller 16 as the transport member T is adjusted to be 2.0 or more (preferably 10.0 or more and 30.0 or less).

In the first specific example, it is preferable that an absolute value of a difference between a dispersion component of the surface energy of the ink film and a dispersion component of the surface energy of the transport member T is adjusted to be 5.0 or more and 30.0 or less.

The absolute value of the difference between the hydrogen bonding component of the surface energy of the ink film and the hydrogen bonding component of the surface energy of the transport roller 16 as the transport member T, and the absolute value of the difference between the dispersion component of the surface energy of the ink film and the dispersion component of the surface energy of the transport roller 16 as the transport member T can be adjusted, for example, by adjusting composition of the ink for obtaining the ink film, drying conditions of the ink for obtaining the ink film, a material of the surface (surface in contact with the ink film) of the transport roller 16, and the like.

In the present disclosure, in a case where a plurality of the transport members which are in contact with the ink film are present (for example, the transport rollers 16 and 17 in the image recording apparatus 10), a transport member which is located on the most upstream side, that is, a transport member closest to the ink film drying device (for example, the transport roller 16 in the image recording apparatus 10) corresponds to the transport member T (that is, the transport member which controls the surface energy with the ink film).

The same applies to the transport member P, a transport member T1 described later, and a transport member T2 described later, which are a transport member closest to the drying device.

In the first specific example, a plurality of ink jet heads may be arranged at the position of the ink jet head 32 along the transport direction. In this case, a plurality of inks of colors (for example, a first ink and a second ink described later) can be applied in a superimposed manner.

In this case, the plurality of inks of colors applied in a superimposed manner can be dried by the ink drying devices 34 and 36, whereby an ink film derived from the plurality of inks of colors can be obtained.

In the image recording method according to the present disclosure, the pretreatment liquid applying step and the pretreatment liquid drying step are not essential steps.

Therefore, in the first specific example, in a case where the pretreatment liquid applying step and the pretreatment liquid drying step are not performed, the pretreatment liquid applying device 22 and the pretreatment liquid drying device 24 are not used (that is, the non-permeable substrate 20 is transported to pass through the pretreatment liquid applying device 22 and the pretreatment liquid drying device 24), and the ink may be directly applied onto the non-permeable substrate 20.

In addition, in the first specific example, in a case where the pretreatment liquid applying step and the pretreatment liquid drying step are not performed, the pretreatment liquid applying device 22, the pretreatment liquid drying device 24, and the transport rollers 11 to 14 may be not included.

The first specific example may include other elements in addition to the above-described elements.

Examples of other elements include a unwinding device which is provided on the upstream side of the transport roller 11 and unwinds the non-permeable substrate wound in a roll shape; a winding device which is provided on the downstream side of the transport roller 17 and winds the non-permeable substrate provided with the ink film (that is, the image) is formed; and a tension applying device which applies tension to the non-permeable substrate to be transported.

In addition, examples of other devices also include an ink jet head and an ink drying device, provided on the downstream side of the transport roller 17. Examples of a case in which the ink jet head and the ink drying device are provided on the downstream side of the transport roller 17 include a second specific example described later.

Hereinafter, the recording method according to the present disclosure will be described in more detail.

<Difference in hydrogen bonding component between ink film and transport member T>

In the recording method according to the present disclosure, the difference in hydrogen bonding component between the ink film and the transport member T (that is, the absolute value of the difference between the hydrogen bonding component of the surface energy of the ink film and the hydrogen bonding component of the surface energy of the transport member T) is 2.0 mN/m or more, as described above.

As a result, the transfer of the ink film to the transport member can be suppressed.

From the viewpoint of further suppressing the transfer of the ink film to the transport member, the difference in hydrogen bonding component between the ink film and the transport member T is preferably 5.0 mN/m or more, and more preferably 10.0 mN/m or more.

The upper limit of the difference in hydrogen bonding component between the ink film and the transport member T is not particularly limited, but is, for example, 50.0 mN/m.

From the viewpoint of further suppressing scratches on the ink film, the difference in hydrogen bonding component between the ink film and the transport member T is preferably 40.0 mN/m or less, and more preferably 30.0 mN/m or less.

Examples of a preferred range of the difference in hydrogen bonding component between the ink film and the transport member T include a range of 10.0 mN/m or more and 30.0 mN/m or less.

A size relationship between the hydrogen bonding component of the ink film and the hydrogen bonding component of the transport member T (which one is higher) is not particularly limited, but from the viewpoint of manufacturing suitability of the ink, it is preferable that the hydrogen bonding component of the ink film is higher than the hydrogen bonding component of the transport member T.

<Difference in dispersion component between ink film and transport member T>

In the recording method according to the present disclosure, the difference in dispersion component between the ink film and the transport member T (that is, the absolute value of the difference between the dispersion component of the surface energy of the ink film and the dispersion component of the surface energy of the transport member T) is preferably 2.0 mN/m or more, and more preferably 5.0 mN/m or more.

As a result, the transfer of the ink film to the transport member can be further suppressed.

The upper limit of the difference in dispersion component between the ink film and the transport member T is not particularly limited, but is, for example, 50.0 mN/m.

From the viewpoint of further suppressing scratches on the ink film, the difference in hydrogen bonding component between the ink film and the transport member T is preferably 35.0 mN/m or less, and more preferably 30.0 mN/m or less.

Examples of a preferred range of the difference in dispersion component between the ink film and the transport member T include a range of 5.0 mN/m or more and 30.0 mN/m or less.

<Measuring method of surface energy (hydrogen bonding component and dispersion component) of ink film and transport member>

The surface energy (hydrogen bonding component and dispersion component) of the ink film and the surface energy of the transport member T in the present disclosure are calculated by the Owens-Wendt method.

The surface energy of each of a pretreatment liquid film, a first ink film, a second ink film, a transport member P, a transport member T1, and a transport member T2, which will be described later, is also measured in the same manner.

The surface energy of the ink film is measured using a non-permeable substrate provided with the ink film under the ink application conditions in the ink applying step and under the drying conditions in the ink drying step (hereinafter, also referred to as "ink film sample").

A water contact angle and a diiodomethane contact angle described later are measured within 30 minutes after the production of the ink film sample (that is, after the drying of the ink is completed).

The surface energy of the transport member T is measured using the transport member T itself.

Using a contact angle meter, the contact angle of water and the contact angle of diiodomethane with the surface of the ink film in the ink film sample are measured.

As the contact angle meter, for example, "DM-501" (product name, manufactured by Kyowa Interface Science Co., Ltd.) can be used.

The surface energy of the ink film is calculated by the Owens-Wendt method using measured values of the contact angles of water and diiodomethane with respect to the surface of the ink film and dispersion components and hydrogen bonding components of water and diiodomethane.

The Owens-Wendt Method is described in D. K. Owens and R. C. Wendt, Journal of applied polymer science Vol. 13, PP. 1741 to 1747 (1969).

Hereinafter, a specific calculation method will be described. In a case where a liquid is dropped on a solid surface (for example, the ink film), each parameter at an interface of the solid surface and the liquid satisfies the following equations.

Equation 1 described below is known as the Young's equation.

Equation 2 described below is known as the Dupre equation.

Equation 3, Equation 4, and Equation 5 described below are known as equations using the Owens-Wendt method.

$$\gamma_S = \gamma_L \cos\theta + \gamma_{SL} \ \dots \ (1)$$

$$W = \gamma_S + \gamma_L - \gamma_{SL} \ \dots \ (2)$$

$$\gamma_S = \gamma_S{}^d + \gamma_S{}^h \ \dots \ (3)$$

$$\gamma_L = \gamma_L{}^d + \gamma_L{}^h \ \dots \ (4)$$

$$W = 2(\gamma_S{}^d \gamma_L{}^d)^{1/2} + 2(\gamma_S{}^h \gamma_L{}^h)^{1/2} \ \dots \ (5)$$

In Equation 1 to Equation 5, the details of each symbol are as follows.

$\theta$ ... contact angle of liquid with solid surface
$\gamma_S$ ... surface energy of solid surface
$\gamma_L$ ... surface energy of liquid
$\gamma_{SL}$ ... interface energy between solid surface and liquid
$W$ ... work of adhesion
$\gamma_S{}^d$ ... dispersion component of surface energy of solid surface
$\gamma_S{}^h$ ... hydrogen bonding component of surface energy of solid surface
$\gamma_L{}^d$ ... dispersion component of surface energy of liquid
$\gamma_L{}^h$ ... hydrogen bonding component of surface energy of liquid

Equation 6 described below is obtained from Equation 1 to Equation 5 described above.

$$(\gamma_S^d \gamma_L^d)^{1/2} + (\gamma_S^h \gamma_L^h)^{1/2} = \gamma_L(1 + \cos\theta)/2 \ldots (6)$$

Equation 6A and Equation 6B are established using water and diiodomethane as the liquid in Equation 6.

$$(\gamma_S^d \gamma_{L1}^d)^{1/2} + (\gamma_S^h \gamma_{L1}^h)^{1/2} = \gamma_{L1}(1 + \cos\theta 1)/2 \ldots (6A)$$

$$(\gamma_S^d \gamma_{L2}^d)^{1/2} + (\gamma_S^h \gamma_{L2}^h)^{1/2} = \gamma_{L2}(1 + \cos\theta 2)/2 \ldots (6B)$$

In Equation 6A and Equation 6B, the details of each symbol are as follows.

$\theta 1$ ... contact angle of water with solid surface
$\theta 2$ ... contact angle of diiodomethane with solid surface
$\gamma_{L1}$ ... surface energy (72.8 mN/m) of water
$\gamma_{L1}^d$ ... dispersion component (21.8 mN/m) of surface energy of water
$\gamma_{L1}^h$ ... hydrogen bonding component (51.0 mN/m) of surface energy of water
$\gamma_{L2}$ ... surface energy (50.8 mN/m) of diiodomethane
$\gamma_{L2}^d$ ... dispersion component (50.8 mN/m) of surface energy of diiodomethane
$\gamma_{L2}^h$ ... hydrogen bonding component (0 mN/m) of surface energy of diiodomethane

The values in parentheses are values described in the document.
$\theta 1, \theta 2, \gamma_{L1}, \gamma_{L1}^d, \gamma_{L1}^h \gamma_{L2}, \gamma_{L2}^d$, and $\gamma_{L2}^h$ are substituted into Equation 6A and Equation 6B, whereby $\gamma_S^d$ and $\gamma_S^h$ are calculated.
As $\theta 1$ and $\theta 2$, the measured values by the above-described measurement method are used.
The surface energy $\gamma_S$ of the ink film is calculated by substituting the calculated $\gamma_S^d$ and $\gamma_S^h$ into Expression 3.

<Difference in surface roughness between ink film and transport member T>

In the present disclosure, an absolute value of a difference between a surface roughness of the ink film and a surface roughness of the transport member T (hereinafter, also referred to as "difference in surface roughness between ink film and transport member T") is preferably 50.0 $\mu$m or less, more preferably 30.0 $\mu$m or less, and still more preferably 10.0 $\mu$m or less.
In a case where the difference in surface roughness between the ink film and the transport member T is 50.0 $\mu$m or less, the transfer of the ink film to the transport member can be further suppressed.
The lower limit of the difference in surface roughness between the ink film and the transport member T is not particularly limited. The difference in surface roughness between the ink film and the transport member T may be 0 $\mu$m, more than 0 $\mu$m, 0.1 $\mu$m or more, or 1.0 $\mu$m or more.
In the present disclosure, the "surface roughness" means an arithmetic average height Ra specified in JIS B 0601-2001.
The surface roughness of the ink film (including the first ink film and the second ink film described later) is measured using the ink film in the ink film sample described above within 30 minutes after the production of the ink film sample (that is, after the drying of the ink is completed).
Hereinafter, each step of the recording method according to the present disclosure will be described.

<Ink applying step>

The recording method according to the present disclosure includes an ink applying step of applying an ink containing water, a pigment, and a resin onto a non-permeable substrate by an ink jet method.

(Non-permeable substrate)

In the present disclosure, impermeability of the non-permeable substrate denotes a property that a water absorption rate in 24 hours, which is measured in conformity with ASTM D570-98 (2018), is 2.5% or less. Here, the unit "%" of the water absorption rate is on a mass basis. The above-described water absorption rate is preferably 1.0% or less and more preferably 0.5% or less.
Examples of a material of the non-permeable substrate include glass, a metal (such as aluminum, zinc, and copper), and a resin (such as polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, nylon, and an acrylic resin).

It is preferable that the material of the non-permeable substrate is a resin. That is, it is preferable that the non-permeable substrate is a resin substrate.

Among these, from the viewpoint of general-purpose properties, the material of the non-permeable substrate is preferably polypropylene, polyethylene, polyethylene terephthalate, nylon, an acrylic resin, or polyvinyl chloride.

As a shape of the non-permeable substrate, a sheet-like (film-like) or a plate-like non-permeable substrate is preferable. Examples of the non-permeable substrate having such a shape include a glass plate, a metal plate, a resin sheet (resin film), paper on which plastic is laminated, paper on which a metal is laminated or vapor-deposited, and a plastic sheet (plastic film) on which a metal is laminated or vapor-deposited.

Examples of the non-permeable substrate made of a resin include a resin sheet (resin film), and more specific examples thereof include a flexible packaging material for packaging food or the like, and a panel for guiding the floor of a mass retailer.

Examples of the non-permeable substrate also include a textile (woven fabric) or nonwoven fabric formed of impermeable fibers, in addition to the sheet-like (film-like) or plate-like non-permeable substrate.

A thickness of the non-permeable substrate is preferably $0.1\ \mu m$ to $1,000\ \mu m$, more preferably $0.1\ \mu m$ to $800\ \mu m$, and still more preferably $1\ \mu m$ to $500\ \mu m$.

The non-permeable substrate may be subjected to a hydrophilization treatment. Examples of the hydrophilization treatment include a corona treatment, a plasma treatment, a flame treatment, a heat treatment, an abrasion treatment, a light irradiation treatment (such as an UV treatment), and a flame treatment, but the hydrophilization treatment is not limited thereto. The corona treatment can be performed, for example, using CORONA MASTER (product name "PS-10S", manufactured by Shinko Electric & Instrumentation Co., Ltd.). Conditions for the corona treatment may be appropriately selected according to the type and the like of the non-permeable substrate.

The non-permeable substrate may be a non-permeable substrate having transparency.

Here, the expression of "having transparency" denotes that a transmittance in visible light having a wavelength of 400 nm to 700 nm is 80% or more (preferably 90% or more).

In a case where the non-permeable substrate is a non-permeable substrate having transparency, the image is easily visually recognized through the non-permeable substrate from an image non-recorded surface side of the non-permeable substrate.

For example, with the non-permeable substrate having transparency, in a case where the pretreatment liquid, a first ink as a colored ink described later, and a second ink as a white ink described later are applied onto the non-permeable substrate in this order to record an image, a colored image (for example, a pattern image such as a character and a figure) with a white image (for example, a solid image) as a background is easily visually recognized through the non-permeable substrate from the image non-recorded surface side of the non-permeable substrate.

(Ink)

Examples of the ink containing water, a pigment, and a resin include a white ink containing water, a white pigment, and a resin (hereinafter, also simply referred to as "white ink"), and a colored ink containing water, a coloring pigment, and a resin (hereinafter, also simply referred to as "colored ink").

Here, the coloring pigment means a chromatic pigment (for example, a cyan pigment, a magenta pigment, a yellow pigment, and the like) or a black pigment.

In addition, the colored ink means a chromatic ink (for example, a cyan ink, a magenta ink, a yellow ink, and the like) or a black ink.

As the ink, a white ink is preferable.

In the ink applying step, only one kind of the ink containing water, a pigment, and a resin may be applied onto the non-permeable substrate, or two or more kinds thereof may be applied onto the non-permeable substrate.

In the ink applying step, a first ink containing water, a pigment, and a resin and a second ink containing water, a pigment, and a resin may be applied onto the non-permeable substrate in a superimposed manner in this order by an ink jet method.

In this case, it is preferable that any one of the first ink or the second ink is the white ink and the other is the colored ink; and it is more preferable that the first ink is the colored ink and the second ink is the white ink.

In a case where the first ink and the second ink are applied onto the non-permeable substrate in a superimposed manner, in the ink drying step described later, the first ink and the second ink applied onto the permeable substrate are dried to obtain ink films (specifically, a first ink film derived from the first ink and a second ink film derived from the second ink).

In this case, operation of drying the first ink may be included between the application of the first ink and the application of the second ink, or operation of drying the first ink may not be included.

-Water-

The ink (for example, the first ink and the second ink; the same applies hereinafter) contains water.

A content of the water is preferably 10% by mass or more, more preferably 20% by mass or more, still more preferably 30% by mass or more, and particularly preferably 50% by mass or more with respect to the total amount of the ink.

The upper limit of the content of the water is appropriately determined according to contents of other components, and is, for example, 99% by mass, preferably 95% by mass, and more preferably 90% by mass with respect to the total amount of the ink.

-Pigment-

The ink contains a pigment.

In a case where the ink is a colored ink, the ink contains a coloring pigment as the pigment.

In a case where the ink is a white ink, the ink contains a white pigment as the pigment.

A commercially available organic pigment or inorganic pigment may be used as the coloring pigment.

Examples of the coloring pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

In addition, the coloring pigment may be a water-insoluble pigment which can be dispersed in water by a dispersing agent, or may be a self-dispersing pigment.

The self-dispersing pigment is a pigment which can be dispersed in water without using a dispersing agent.

The self-dispersing pigment is, for example, a compound in which at least one selected from the group consisting of a hydrophilic group such as a carbonyl group, a hydroxyl group, a carboxyl group, a sulfo group, and a phosphoric acid group and salts thereof is chemically bonded to a surface of the pigment directly or through another group.

In a case where the ink contains the coloring pigment, from the viewpoint of image density and jettability of the ink, a content of the coloring pigment is preferably 1% by mass to 20% by mass, more preferably 1% by mass to 15% by mass, and still more preferably 1% by mass to 10% by mass.

Examples of the white pigment include inorganic pigments such as titanium dioxide, barium sulfate, calcium carbonate, silica, zinc oxide, zinc sulfide, mica, talc, and pearl.

The white pigment is preferably titanium dioxide, barium sulfate, calcium carbonate, or zinc oxide, and more preferably titanium dioxide.

From the viewpoint of covering property, an average primary particle diameter of the white pigment is preferably 150 nm or more, and more preferably 200 nm or more. In addition, from the viewpoint of j ettability of the ink, the average primary particle diameter of the white pigment is preferably 400 nm or less, and more preferably 350 nm or less.

In the present disclosure, the average primary particle diameter of the white pigment is a value measured using a transmission electron microscope (TEM). Specifically, the average primary particle diameter of the white pigment is a value determined by selecting 50 optional particles of the white pigment present in a visual field observed by the TEM, measuring primary particle diameters of the 50 particles, and averaging the measured diameters. As the transmission electron microscope, a transmission electron microscope 1200EX manufactured by JEOL Ltd. can be used.

In a case where the ink contains the white pigment, from the viewpoint of image density and jettability, a content of the white pigment is preferably 2% by mass to 25% by mass, more preferably 5% by mass to 25% by mass, and still more preferably 10% by mass to 20% by mass.

-Resin-

The ink contains at least one resin.

The resin in the ink contributes to film-forming properties of the ink (that is, formability of the ink film).

A weight-average molecular weight (Mw) of the resin is preferably 1,000 to 300,000, more preferably 2,000 to 200,000, and still more preferably 5,000 to 100,000.

In the present disclosure, the weight-average molecular weight (Mw) means a value measured according to gel permeation chromatography (GPC), unless otherwise specified.

For the measurement by gel permeation chromatography (GPC), HLC (registered trademark)-8020GPC (manufactured by Tosoh Corporation) is used as a measuring device, three columns of TSKgel (registered trademark) Super Multipore HZ-H (4.6 mmID × 15 cm, manufactured by Tosoh Corporation) are used as a column, and tetrahydrofuran (THF) is used as an eluent. In addition, as the measurement conditions, a sample concentration of 0.45% by mass, a flow rate of 0.35 ml/min, a sample injection amount of 10 $\mu$l, and a measurement temperature of 40°C are set, and a RI detector is used.

The calibration curve is created from eight samples of "Standard sample TSK standard, polystyrene" manufactured by Tosoh Corporation: "F-40", "F-20", "F-4", "F-1", "A-5000", "A-2500", "A-1000", and "n-propylbenzene".

Examples of the resin include a pigment dispersing resin as a dispersing agent.

Examples of the resin also include resin particles.

The ink may contain at least one pigment dispersing resin.

The pigment dispersing resin is a resin having a function of dispersing a pigment.

The pigment dispersing resin may be a random copolymer or a block copolymer.

The pigment dispersing resin may have a crosslinking structure.

The ink may be prepared using a pigment dispersion liquid containing a pigment and a pigment dispersing resin.

As the pigment dispersing resin, for example, known polymer dispersing agents, such as polymer dispersing agents described in paragraphs 0029 to 0106 of WO2021/221069A, can be used.

In a case where the ink contains the pigment dispersing resin, a ratio of a content of the pigment and a content of the pigment dispersing resin in the ink is preferably 1:0.04 to 1:3, more preferably 1:0.05 to 1:1, and still more preferably 1:0.05 to 1:0.5 on a mass basis.

In a case where the ink contains the pigment dispersing resin, the content of the pigment dispersing resin is preferably 0.1% by mass to 10% by mass, more preferably 0.3% by mass to 5% by mass, and still more preferably 0.5% by mass to 2.5% by mass with respect to the total amount of the ink.

The ink may contain at least one kind of resin particles.

A resin constituting the resin particles is preferably a water-insoluble resin. The "water-insoluble" in the water-insoluble resin means a property that an amount dissolved in 100 g of distilled water at 25°C is less than 2 g.

A volume average particle diameter of the resin particles is preferably 1 nm to 300 nm, more preferably 3 nm to 200 nm, and still more preferably 5 nm to 150 nm.

In the present disclosure, the volume average particle diameter means a value measured using a laser diffraction/scattering type particle size distribution analyzer.

As the measuring device, a particle size distribution measuring device "MICROTRAC MT-3300II" (manufactured by Nikkiso Co., Ltd.) is exemplified.

It is preferable that the resin particles are at least one selected from the group consisting of acrylic resin particles, ester resin particles, a mixture of acrylic resin particles and ester resin particles, composite particles containing an acrylic resin and an ester resin, styrene-acrylic resin particles, and polyurethane resin particles.

In the present disclosure, the acrylic resin means a polymer (homopolymer or copolymer) of a raw monomer including at least one selected from the group consisting of acrylic acid, a derivative of acrylic acid (for example, acrylic acid ester and the like), methacrylic acid, and a derivative of methacrylic acid (for example, methacrylic acid ester and the like).

From the viewpoint of further improving rub resistance of the image, a glass transition temperature (Tg) of the resin particles is preferably 50°C to 250°C and more preferably 50°C to 150°C.

Here, a measurement Tg obtained by actual measurement is employed as the glass transition temperature (Tg) of the resin particles. A method of measuring the measurement Tg can refer to paragraph 0111 of JP2015-25076A.

For the resin particles, for example, descriptions described in paragraphs 0038 to 0114 of WO2021/192720A and paragraphs 0109 to 0120 of JP2015-25076A may be referred to.

In a case where the ink contains the resin particles, a content of the resin particles in the ink is preferably 1% by mass to 20% by mass, more preferably 2% by mass to 15% by mass, and still more preferably 2% by mass to 10% by mass with respect to the total amount of the ink.

-Water-soluble organic solvent-

It is preferable that the ink contains at least one water-soluble organic solvent.

In this manner, jetting stability from the ink jet head is ensured.

The water-soluble organic solvent contained in the ink may be used alone or in combination of two or more kinds thereof.

In the present disclosure, "water-soluble" in the "water-soluble organic solvent" means a property of being dissolved in 1 g or more in 100 g of water at 25°C.

The type of the water-soluble organic solvent which can be contained in the ink is not particularly limited, and examples thereof include monoalcohol having 1 to 4 carbon atoms; diol such as 1,3-propanediol, 1,3-butanediol, 1,4-butanediol, 2-butene-1,4-diol, 2-ethyl-1,3-hexanediol, 2-methyl-2,4-pentanediol, 1,2-octanediol, 1,2-hexanediol, 1,2-pentanediol, and 4-methyl-1,2-pentanediol; triol such as glycerin, 1,2,6-hexanetriol, and trimethylolpropane; alkylene glycol such as ethylene glycol and propylene glycol; alkylene glycol monoalkyl ether such as ethylene glycol monoalkyl ether and propylene glycol monoalkyl ether; polyalkylene glycol such as diethylene glycol, triethylene glycol, tetraethylene glycol, pentaethylene glycol, dipropylene glycol, and polyoxyethylene polyoxypropylene glycol; polyalkylene glycol ether such as diethylene glycol monoalkyl ether, triethylene glycol monoalkyl ether, tripropylene glycol monoalkyl ether, and polyoxypropylene glyceryl ether; and 2-pyrrolidone and N-methyl-2-pyrrolidone.

From the viewpoint of jetting stability, it is preferable that the water-soluble organic solvent in the ink includes at least one selected from the group consisting of alkylene glycol and alkylene glycol monoalkyl ether.

A content of the water-soluble organic solvent is preferably 10% by mass to 40% by mass and more preferably 15% by mass to 30% by mass with respect to the total amount of the ink.

-Additive-

The ink may contain an additive such as a surfactant, a water-soluble resin, a co-sensitizer, an ultraviolet absorbing agent, an antioxidant, a fading inhibitor, a conductive salt, and a basic compound, as necessary.

-Physical properties-

From the viewpoint of improving the jetting stability, a pH (25°C) of the ink is preferably 7 to 10 and more preferably 7.5 to 9.5. The pH of the ink can be measured by the same method as that for the pH of the pretreatment liquid.

A viscosity (25°C) of the ink is preferably 0.5 mPa·s to 30 mPa·s, more preferably 2 mPa·s to 20 mPa·s, preferably 2 mPa·s to 15 mPa·s, and even more preferably 3 mPa·s to 10 mPa·s.

The viscosity of the ink is measured at 25°C using a viscometer, for example, a TV-22 type viscometer manufactured by Toki Sangyo Co., Ltd.

A surface tension (25°C) of the ink is preferably 60 mN/m or less, more preferably 20 mN/m to 50 mN/m, and still more preferably 25 mN/m to 40 mN/m.

The surface tension is measured at 25°C using a surface tension meter, for example, by a plate method using an automatic surface tension meter (trade name, "CBVP-Z") manufactured by Kyowa Interface Science Co., Ltd.

(Method of applying ink)

The application of the ink is performed by an ink jet method.

The ejection method of the ink by the ink jet method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming bubbles, and using generated pressure, and the like may be used.

As the ink jet recording method, particularly, it is possible to effectively use the method described in JP1979-59936A (JP-S54-59936A), which is an ink jet recording method of causing an ink to experience a rapid volume change by the action of thermal energy and jetting the ink from a nozzle by using the acting force resulting from the change of state. As the ink jet recording method, a method described in paragraphs 0093 to 0105 of JP2003-306623A can also be applied.

The application of the ink onto the non-permeable substrate by the ink jet recording method can be performed by allowing the ink to be jetted from a nozzle of an ink jet head.

The way of using the ink jet head also includes a shuttle method of performing recording while a short serial head is allowed to scan in the width direction of the recorded medium, and a line method of using a line head in which recording elements are arranged correspondingly to the entire range of one side of the recorded medium.

In the line method, image recording can be performed on the entire surface of the recorded medium by scanning the recorded medium in a direction intersecting the direction in which the recording elements are aligned. In the line method, a transport system such as a carriage that allows the short head to perform scanning in the shuttle method is unnecessary. In addition, in the line method, as compared with the shuttle method, a carriage is not required to move, and a complicated scanning control with the recorded medium is unnecessary, and only the recorded medium moves. Therefore, according to the line method, an increase in the recording speed of an image is achieved as compared with the shuttle method.

The ink is preferably applied using an ink jet head having a resolution of 300 dpi or more (more preferably 600 dpi or more and still more preferably 800 dpi or more). Here, dpi is an abbreviation for dot per inch, and 1 inch is 2.54 cm.

From the viewpoint of obtaining an image with high definition, a droplet amount of the ink is preferably 1 picoliter (pL) to 10 pL and more preferably 1.5 pL to 6 pL.

<Ink drying step>

The recording method according to the present disclosure includes an ink drying step of drying the ink applied onto the non-permeable substrate to obtain an ink film.

A method for drying the ink is not particularly limited, and examples thereof include infrared (IR) drying, hot air drying (for example, a dryer and the like), and heating and drying with a heating device (for example, a heater, a hot plate, a heating furnace, and the like).

The method of heating and drying may be a method of combining two or more of the above-described methods.

The heating drying can be performed by heating the ink from at least one of an image-recorded surface side or an image non-recorded surface side of the non-permeable substrate.

A heating temperature in the heating and drying of the ink is preferably 35°C or higher, more preferably 40°C or higher, still more preferably 50°C or higher, and even more preferably 60°C or higher.

The upper limit value of the heating temperature is not particularly limited, but is preferably 100°C and more preferably 90°C.

A heating time in the heating and drying of the ink is not particularly limited, but is preferably 1 second to 180 seconds, more preferably 1 second to 120 seconds, and still more preferably 1 second to 60 seconds.

<Transporting step>

The recording method according to the present disclosure includes a step of transporting, by a transport member T, the non-permeable substrate provided with the ink film in a disposition in which the transport member T and the ink film are in contact with each other.

Examples of the transport member T include a transport roller.

In the recording method according to the present disclosure, a plurality of transport members which are in contact with the ink film may be present.

The transport member T in this case is a transport member located on the most upstream side among the plurality of transport members which are in contact with the ink film.

A material of the transport member T is not particularly limited as long as it is a material in which the difference in hydrogen bonding component between the ink film and the transport member T is 2.0 or more.

For the material of the transport member T, for example, Examples described later can be referred to.

<Pretreatment liquid applying step and the like>

The recording method according to the present disclosure may include, before the ink applying step, a pretreatment liquid applying step of applying a pretreatment liquid containing water, a coagulating agent, and a resin onto the non-permeable substrate, a pretreatment liquid drying step of drying the pretreatment liquid applied onto the non-permeable substrate to obtain a pretreatment liquid film, and a step of transporting, by a transport member P, the non-permeable substrate provided with the pretreatment liquid film in a disposition in which the transport member P and the pretreatment liquid film are in contact with each other.

In this case, an absolute value of a difference between a dispersion component of a surface energy of the pretreatment liquid film and a dispersion component of a surface energy of the transport member P (hereinafter, also referred to as "difference in dispersion component between pretreatment liquid film and transport member P) is preferably 2.0 mN/m or more, and preferably 5.0 mN/m or more.

In a case where the difference in dispersion component between the pretreatment liquid film and the transport member P is 2.0 mN/m or more, streaks in the image finally obtained (that is, a laminate of the ink film and the pretreatment liquid film) are further suppressed.

Here, the streaks in the image are defects caused by the transfer of the pretreatment liquid film to the transport member P. Specifically, the defects occur in the pretreatment liquid film due to the transfer of the pretreatment liquid film to the transport member P, and then the ink is applied onto the defects, whereby the streaks occur in the image.

The upper limit of the difference in dispersion component between the pretreatment liquid film and the transport member P is not particularly limited, and may be, for example, 30.0 mN/m, 25.0 mN/m, or 21.0 mN/m.

Examples of a preferred range of the difference in dispersion component between the pretreatment liquid film and the transport member P include a range of 2.0 mN/m or more and 30.0 mN/m or less.

In the recording method according to the present disclosure, a difference in hydrogen bonding component between the pretreatment liquid film and the transport member P (that is, an absolute value of a difference between a hydrogen bonding component of the surface energy of the pretreatment liquid film and a hydrogen bonding component of the surface energy of the transport member P) is, for example, 20.0 mN/m or more and 50.0 mN/m, preferably 30.0 mN/m or more and 45.0 mN/m or less.

A size relationship between the hydrogen bonding component of the pretreatment liquid film and the hydrogen bonding component of the transport member P (which one is higher) is not particularly limited, but from the viewpoint of manufacturing suitability of the pretreatment liquid, it is preferable that the hydrogen bonding component of the pretreatment liquid film is higher than the hydrogen bonding component of the transport member P.

(Pretreatment liquid)

The pretreatment liquid contains water, a coagulating agent, and a resin.

-Water-

The pretreatment liquid contains water.
A content of water is preferably 50% by mass or more and more preferably 60% by mass or more with respect to the total amount of the pretreatment liquid.
The upper limit of the content of water depends on the amount of other components, but is preferably 90% by mass or less and more preferably 80% by mass or less with respect to the total amount of the pretreatment liquid.

-Coagulating agent-

The pretreatment liquid contains at least one coagulating agent.
The coagulating agent in the pretreatment liquid coagulates the components in the ink on the non-permeable substrate. As a result, image quality of the image can be improved.
It is preferable that the coagulating agent is at least one selected from the group consisting of an organic acid, a polyvalent metal compound, a metal complex, and a cationic polymer.
Preferred examples of the coagulating agent also include coagulating agents described in paragraphs 0122 to 0130 of WO2020/195360A.
Hereinafter, preferred aspects of each of the organic acid, the polyvalent metal compound, the metal complex, and the cationic polymer, which can be used as the coagulating agent, will be described.

--Organic acid--

Examples of the organic acid include an organic compound having an acidic group.
Examples of the acidic group include a phosphoric acid group, a phosphonic acid group, a phosphinic acid group, a sulfuric acid group, a sulfonic acid group, a sulfinic acid group, and a carboxy group.
Among these, from the viewpoint of the coagulating rate of the ink, as the acidic group, a phosphoric acid group or a carboxy group is preferable, and a carboxy group is more preferable.
It is preferable that at least a part of the acidic group is dissociated in the pretreatment liquid.
Examples of the organic acid include, as an organic compound having a carboxy group, (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.
Among these, from the viewpoint of coagulating rate of the ink, as the organic compound having a carboxy group, di- or higher valent carboxylic acid (hereinafter, also referred to as polyvalent carboxylic acid) is preferable, and dicarboxylic acid is more preferable.
Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable; and malonic acid, malic acid, tartaric acid, succinic acid, glutaric acid, pimelic acid, adipic acid, or citric acid is more preferable.
It is preferable that the organic acid has a low pKa (for example, 1.0 to 5.0). As a result, surface charge of particles, for example, the pigment stably dispersed in the ink by a weakly acidic functional group such as a carboxy group, resin particles, and the like can be reduced by bringing the ink into contact with the organic acid having a lower pKa to degrade dispersion stability.
It is preferable that the organic acid has a low pKa, high solubility in water, and a valence of divalent or more. In addition, it is more preferable that the organic acid has a high buffer capacity in a pH region with a pKa lower than a pKa of the functional group (for example, a carboxy group) which stably disperses particles in the ink.

--Polyvalent metal compound--

Examples of the polyvalent metal compound include a polyvalent metal salt.
Examples of the polyvalent metal salt include an organic acid polyvalent metal salt and an inorganic acid polyvalent metal salt.

As the organic acid polyvalent metal salt, a polyvalent metal salt of the above-described organic acid (for example, formic acid, acetic acid, or benzoic acid) is preferable.

As the inorganic acid polyvalent metal salt, a nitric acid polyvalent metal salt, a hydrochloric acid polyvalent metal salt, or a thiocyanic acid polyvalent metal salt) is preferable.

Examples of the polyvalent metal salt include salts of alkaline earth metals of Group 2 (such as magnesium and calcium) in the periodic table, salts of transition metals of Group 3 (such as lanthanum) in the periodic table, salts of metals of Group 13 (such as aluminum) in the periodic table, and salts of lanthanides (such as neodymium).

As the polyvalent metal salt, a calcium salt, a magnesium salt, or an aluminum salt is preferable, and a calcium salt or a magnesium salt is more preferable.

As the polyvalent metal compound, an organic acid polyvalent metal salt is preferable, and an organic acid calcium salt or an organic acid magnesium salt is more preferable.

It is preferable that at least a part of the polyvalent metal compound is dissociated into polyvalent metal ions and counter-ions in the pretreatment liquid.

--Metal complex--

It is preferable that the metal complex contains at least one selected from the group consisting of zirconium, aluminum, and titanium as a metal element.

As the metal complex, a metal complex containing, as a ligand, at least one selected from the group consisting of acetate, acetylacetonate, methylacetoacetate, ethylacetoacetate, octylene glycolate, butoxyacetylacetonate, lactate, a lactate ammonium salt, and triethanol aminate is preferable.

The metal complex may be a commercially available product. Various organic ligands, particularly various multidentate ligands which are capable of forming metal chelate catalysts are commercially available. Therefore, the metal complex may be a metal complex prepared by combining a commercially available organic ligand with a metal.

--Cationic polymer--

It is preferable that the cationic polymer is a homopolymer of a cationic monomer having a primary to tertiary amino group or a quaternary ammonium base, or a copolymer or a condensed polymer of a cationic monomer and a non-cationic monomer. The cationic polymer may be used in any form of a water-soluble polymer or a water-insoluble polymer (that is, latex particles).

Examples of the cationic polymer include polyvinylpyridine salt, polyalkylaminoethyl acrylate, polyalkylaminoethyl methacrylate, polyvinylimidazole, polyethyleneimine, polybiguanide, polyguanide, polyallylamine, and derivatives thereof.

From the viewpoint of viscosity of the pretreatment liquid, it is preferable that a weight-average molecular weight of the cationic polymer is small. **In** a case where the pretreatment liquid is applied onto a resin substrate by an ink jet recording method, the weight-average molecular weight thereof is preferably 1,000 to 500,000, more preferably 1,500 to 200,000, and still more preferably 2,000 to 100,000. It is advantageous that the weight-average molecular weight thereof is 1,000 or more from the viewpoint of coagulating rate. It is advantageous that the weight-average molecular weight thereof is 500,000 or less from the viewpoint of jetting reliability. However, the weight-average molecular weight thereof is not limited thereto in a case where the pretreatment liquid is applied onto a resin substrate by a method other than the ink jet recording method.

A content of the coagulating agent in the pretreatment liquid is preferably 0.1% by mass to 40% by mass, more preferably 0.1% by mass to 30% by mass, still more preferably 1% by mass to 20% by mass, and even more preferably 1% by mass to 10% by mass with respect to the total amount of the pretreatment liquid.

-Resin-

The pretreatment liquid contains at least one resin.

The resin in the pretreatment liquid contributes to film-forming properties of the pretreatment liquid (that is, formability of the pretreatment liquid film).

As the resin in the pretreatment liquid, the same resin as the resin in the ink (for example, the resin particles) can be used.

A content of the resin in the pretreatment liquid is not particularly limited.

The content of the resin is preferably 0.5% by mass to 30% by mass, more preferably 1% by mass to 20% by mass, and particularly preferably 1% by mass to 15% by mass with respect to the total amount of the pretreatment liquid.

-Water-soluble organic solvent-

The pretreatment liquid may contain at least one water-soluble organic solvent.

As the water-soluble organic solvent in the pretreatment liquid, the same water-soluble organic solvent as the water-soluble organic solvent which can be contained in the ink can be used.

-Additive-

The ink may contain an additive such as a surfactant, a water-soluble resin, a cosensitizer, an ultraviolet absorbing agent, an antioxidant, a fading inhibitor, a conductive salt, and a basic compound, as necessary.

-Physical properties-

A pH of the pretreatment liquid is preferably 2.0 to 7.0 and more preferably 2.0 to 4.0. The pH of the pretreatment liquid is measured by the same method as in the pH of the ink.

From the viewpoint of coating properties of the pretreatment liquid, a viscosity of the pretreatment liquid is preferably 0.5 mPa·s to 10 mPa·s and more preferably 1 mPa·s to 5 mPa·s. The viscosity is a value measured at 25°C using a viscometer. The viscosity of the pretreatment liquid is measured by the same method as in the viscosity of the ink.

A surface tension of the pretreatment liquid is preferably 60 mN/m or less, more preferably 20 mN/m to 50 mN/m, and still more preferably 30 mN/m to 45 mN/m. The surface tension is a value measured at a temperature of 25°C. The surface tension of the pretreatment liquid is measured by the same method as in the surface tension of the ink.

(Method of applying pretreatment liquid)

A method of applying the pretreatment liquid is not particularly limited, and examples thereof include known methods such as a coating method, a dipping method, and an ink jet recording method.

Examples of the coating method include known coating methods using a bar coater, an extrusion die coater, an air doctor coater, a blade coater, a rod coater, a knife coater, a squeeze coater, a reverse roll coater, or the like.

(Pretreatment liquid drying step)

It is preferable that the recording method according to the aspect including the pretreatment liquid applying step includes a pretreatment liquid drying step of drying the pretreatment liquid applied onto the non-permeable substrate to obtain a pretreatment liquid film.

A method of drying the pretreatment liquid is not particularly limited, but for example, the same method as the method exemplified in the method of drying the ink can be applied.

A preferred range of drying conditions (for example, the heating temperature and the heating time) of the pretreatment liquid is the same as a preferred range of the drying conditions of the ink.

(Step of transporting)

The recording method according to the aspect including the pretreatment liquid applying step may include a step of transporting, by a transport member P, the non-permeable substrate provided with the pretreatment liquid film in a disposition in which the transport member P and the pretreatment liquid film are in contact with each other.

Examples of the transport member P include a transport roller.

In the recording method according to the aspect including the pretreatment liquid applying step, a plurality of transport members which are in contact with the pretreatment liquid film may be present.

The transport member P in this case is a transport member located on the most upstream side among the plurality of transport members which are in contact with the pretreatment liquid film.

A material of the transport member P is not particularly limited as long as it is a material in which the difference in dispersion component between the pretreatment liquid film and the transport member P is 2.0 or more.

For the material of the transport member P, for example, Examples described later can be referred to.

[One embodiment of recording method (recording method X)]

Hereinafter, one embodiment of the recording method according to the present disclosure (hereinafter, referred to as a recording method X) will be described, but the recording method according to the present disclosure is not limited to the recording method X.

The recording method X includes a first ink applying step of applying a first ink containing water, a pigment, and a resin onto a non-permeable substrate by an ink jet method, a first ink drying step of drying the first ink applied onto the non-permeable substrate to obtain a first ink film, a first transporting step of transporting, by a transport member T1, the non-permeable substrate provided with the first ink film in a disposition in which the transport member T1 and the first ink film are in contact with each other, a second ink applying step of applying a second ink containing water, a pigment, and a resin onto the first ink film on the non-permeable substrate which has been transported by the transport member T1, by an ink jet method, a second ink drying step of drying the second ink applied onto the first ink film on the non-permeable substrate to obtain a second ink film, and a second transporting step of transporting, by a transport member T2, the non-permeable substrate provided with the second ink film in a disposition in which the transport member T2 and the second ink film are in contact with each other, in which an absolute value of a difference between a hydrogen bonding component of a surface energy of the first ink film and a hydrogen bonding component of a surface energy of the transport member T1 is 2.0 or more, and an absolute value of a difference between a hydrogen bonding component of a surface energy of the second ink film and a hydrogen bonding component of a surface energy of the transport member T2 is 2.0 or more.

The recording method X may include other steps, as necessary.

According to the recording method X, the transfer of the first ink film to the transport member T1 can be suppressed, and the transfer of the second ink film to the transport member T2 can be suppressed.

Such an effect is achieved by the fact that the difference in hydrogen bonding component between the first ink film and the transport member T1 is 2.0 mN/m or more, and the difference in hydrogen bonding component between the second ink film and the transport member T2 is 2.0 mN/m or more.

In the recording method X, it is preferable that any one of the first ink or the second ink is a white ink containing water, a white pigment, and a resin, and the other is a colored ink containing water, a coloring pigment, and a resin; and it is more preferable that the first ink is the colored ink and the second ink is the white ink.

<Second specific example of image recording apparatus>

Hereinafter, a second specific example of an image recording apparatus used in the image recording method according to the present disclosure will be described with reference to the accompanying drawing.

The second specific example is an example of an image recording apparatus used in the above-described recording method X.

Fig. 2 is a diagram conceptually showing the second specific example of the image recording apparatus used in the image recording method according to the present disclosure (specifically, the recording method X).

As shown in Fig. 2, an image recording apparatus 100 which is the image recording apparatus according to the second specific example includes transport rollers 11 to 14 and 115 to 122 as transport members for transporting a non-permeable substrate 20.

The image recording apparatus 100 includes, in order from an upstream side in the transport direction along the transport direction of the non-permeable substrate 20, a pretreatment liquid applying device 22 for applying a pretreatment liquid onto the non-permeable substrate 20; a pretreatment liquid drying device 24 for drying the pretreatment liquid applied onto the non-permeable substrate 20; a first ink jet head 132 for applying the first ink onto the non-permeable substrate 20 by an ink jet method; first ink drying devices 134 and 136 for drying the first ink applied onto the non-permeable substrate 20 to obtain the first ink film; a second ink jet head 142 for applying the second ink onto the first ink film on the non-permeable substrate 20 by an ink jet method; and second ink drying devices 144 and 146 for drying the second ink applied onto the first ink film on the non-permeable substrate 20 to obtain the second ink film.

In the image recording apparatus 100, the non-permeable substrate 20 is transported in a direction of an arrow in Fig. 2 by the transport rollers 11 to 14 and 115 to 122.

The non-permeable substrate 20 to be transported is subjected to application of the pretreatment liquid by the pretreatment liquid applying device 22, drying of the pretreatment liquid by the pretreatment liquid drying device 24, application of the first ink by the first ink jet head 132, drying of the ink by the first ink drying devices 134 and 136, application of the second ink by the second ink jet head 142, and drying of the second ink by the second ink drying devices 144 and 146, in this order.

As the pretreatment liquid, a pretreatment liquid containing water, a coagulating agent, and a resin is used.

Preferred aspects of the pretreatment liquid are as described above.

As the first ink and the second ink, inks containing water, a pigment, and a resin are used.

Preferred aspects of the first ink and the second ink are as described above.

A preferred combination of the first ink and the second ink is a combination in which the first ink is any one of a white ink containing water, a white pigment, and a resin or a colored ink containing water, a coloring pigment (note: including a black pigment), and a resin (note: including a black ink), and the second ink is the other of the white ink or the colored ink.

A more preferred combination of the first ink and the second ink is a combination in which the first ink is the above-described colored ink and the second ink is the above-described white ink.

Each of the transport rollers 111 to 122 as the transport members for transporting the non-permeable substrate 20 transports the non-permeable substrate 20 while being in contact with the application surface and the non-application surface in the non-permeable substrate 20.

Also in the image recording apparatus 100 according to the second specific example, the pretreatment liquid is applied onto the non-permeable substrate 20 to be transported, and then the pretreatment liquid is dried to obtain a pretreatment liquid film.

In the image recording apparatus 100 according to the second specific example, the flow until the pretreatment liquid film is obtained is the same as the flow until the pretreatment liquid film is obtained in the image recording apparatus 10 according to the first specific example.

The non-permeable substrate 20 provided with the pretreatment liquid film is transported to below the first ink jet head 132 by the transport roller 14 (that is, the transport member P) in a disposition in which the transport roller 14 (that is, the transport member P) and the pretreatment film are in contact with each other.

By the first ink jet head 132, the first ink is applied onto the pretreatment liquid film on the non-permeable substrate 20, which has reached below the first ink jet head 132.

The first ink applied onto the pretreatment liquid film on the non-permeable substrate 20 is dried by the first ink drying devices 134 and 136 to form the first ink film.

The non-permeable substrate 20 provided with the first ink film is transported by the transport roller 116 as a transport member T1, which is disposed on the downstream side of the first ink drying device 136 in a disposition in which the transport member T1 (that is, the transport roller 116) and the first ink film are in contact with each other.

The non-permeable substrate 20 transported by the transport member T1 (that is, the transport roller 116) is further transported by the transport roller 117, the transport roller 118, and the transport roller 119, and reaches below the second ink jet head 142.

By the second ink jet head 142, the second ink is applied onto the first ink film on the non-permeable substrate 20, which has reached below the second ink jet head 142.

The second ink applied onto the first ink film on the non-permeable substrate 20 is dried by the second ink drying devices 144 and 146 to form the second ink film.

The non-permeable substrate 20 provided with the second ink film is transported by the transport roller 121 as a transport member T2, which is disposed on the downstream side of the second ink drying device 146 (that is, the downstream side of the non-permeable substrate 20 in the transport direction), in a disposition in which the transport member T2 (that is, the transport roller 121) and the second ink film are in contact with each other.

In the second specific example, the absolute value of the difference between the hydrogen bonding component of the surface energy of the first ink film and the hydrogen bonding component of the surface energy of the transport roller 116 as the transport member T1 is adjusted to be 2.0 or more (preferably 10.0 or more and 30.0 or less).

In the second specific example, it is preferable that an absolute value of a difference between a dispersion component of the surface energy of the first ink film and a dispersion component of the surface energy of the transport member T1 is adjusted to be 5.0 or more and 30.0 or less.

The absolute value of the difference between the hydrogen bonding component of the surface energy of the first ink film and the hydrogen bonding component of the surface energy of the transport roller 116 as the transport member T1, and the absolute value of the difference between the dispersion component of the surface energy of the first ink film and the dispersion component of the surface energy of the transport roller 116 as the transport member T1 can be adjusted, for example, by adjusting composition of the first ink for obtaining the first ink film, drying conditions of the first ink for obtaining the first ink film, a material of the surface (surface in contact with the first ink film) of the transport roller 116, and the like.

In the second specific example, the absolute value of the difference between the hydrogen bonding component of the surface energy of the second ink film and the hydrogen bonding component of the surface energy of the transport roller 121 as the transport member T2 is adjusted to be 2.0 or more (preferably 10.0 or more and 30.0 or less).

In the second specific example, it is preferable that an absolute value of a difference between a dispersion component of the surface energy of the second ink film and a dispersion component of the surface energy of the transport member T2 is adjusted to be 5.0 or more and 30.0 or less.

The absolute value of the difference between the hydrogen bonding component of the surface energy of the second ink film and the hydrogen bonding component of the surface energy of the transport roller 121 as the transport member T2, and the absolute value of the difference between the dispersion component of the surface energy of the second ink film and the dispersion component of the surface energy of the transport roller 121 as the transport member T2 can be adjusted, for example, by adjusting composition of the second ink for obtaining the second ink film, drying conditions of the second ink for obtaining the second ink film, a material of the surface (surface in contact with the second ink film) of the transport roller 121, and the like.

In the second specific example, a plurality of first ink jet heads may be arranged at the position of the first ink jet head 132 along the transport direction. In this case, a plurality of first inks of colors can be applied in a superimposed manner.

In this case, the plurality of first inks of colors applied in a superimposed manner can be dried by the first ink drying devices 134 and 136, whereby the first ink film derived from the plurality of first inks of colors can be obtained.

In the second specific example, a plurality of second ink jet heads may be arranged at the position of the second ink jet head 142 along the transport direction. In this case, a plurality of second inks of colors can be applied in a superimposed manner.

In this case, the plurality of second inks of colors applied in a superimposed manner can be dried by the second ink drying devices 144 and 146, whereby the second ink film derived from the plurality of second inks of colors can be obtained.

In addition, in the image recording method according to the present disclosure, the pretreatment liquid applying step and the pretreatment liquid drying step are not essential steps.

Therefore, in the second specific example, same as the first specific example, the pretreatment liquid applying step and the pretreatment liquid drying step may be omitted, and the first ink may be directly applied onto the non-permeable substrate 20.

In addition, in the first specific example, in a case where the pretreatment liquid applying step and the pretreatment liquid drying step are not performed, the pretreatment liquid applying device 22, the pretreatment liquid drying device 24, and the transport rollers 11 to 14 may be not included.

The second specific example may include other elements in addition to the above-described elements.

The other elements included in the second specific example are the same as the other elements included in the first specific example.

Hereinafter, the recording method X will be described in more detail.

<Difference in hydrogen bonding component between first ink film and transport member T1>

In the recording method X, the difference in hydrogen bonding component between the first ink film and the transport member T1 (that is, the absolute value of the difference between the hydrogen bonding component of the surface energy of the first ink film and the hydrogen bonding component of the surface energy of the transport member T1) is 2.0 mN/m or more, as described above.

As a result, the transfer of the first ink film to the transport member T1 can be suppressed.

From the viewpoint of further suppressing the transfer of the first ink film to the transport member T1, the difference in hydrogen bonding component between the ink film and the transport member T is preferably 5.0 mN/m or more, and more preferably 10.0 mN/m or more.

The upper limit of the difference in hydrogen bonding component between the first ink film and the transport member T1 is not particularly limited, but is, for example, 50.0 mN/m.

From the viewpoint of further suppressing scratches on the first ink film, the difference in hydrogen bonding component between the first ink film and the transport member T1 is preferably 40.0 mN/m or less, and more preferably 30.0 mN/m or less.

Examples of a preferred range of the difference in hydrogen bonding component between the first ink film and the transport member T1 include a range of 10.0 mN/m or more and 30.0 mN/m or less.

A size relationship between the hydrogen bonding component of the first ink film and the hydrogen bonding component of the transport member T1 (which one is higher) is not particularly limited, but from the viewpoint of manufacturing suitability of the ink, it is preferable that the hydrogen bonding component of the first ink film is higher than the hydrogen bonding component of the transport member T1.

<Difference in hydrogen bonding component between second ink film and transport member T2>

A preferred range of the difference in hydrogen bonding component between the second ink film and the transport member T2 is the same as the preferred range of the difference in hydrogen bonding component between the first ink film and the transport member T1.

Examples of a combination of the difference in hydrogen bonding component between the first ink film and the transport member T1 and the difference in hydrogen bonding component between the second ink film and the transport member T2 include a combination in which the difference in hydrogen bonding component between the first ink film and the transport member T1 is 10.0 mN/m or more and 30.0 mN/m or less and the difference in hydrogen bonding component between the second ink film and the transport member T2 is 10.0 mN/m or more and 30.0 mN/m or less.

<Difference in dispersion component between first ink film and transport member T1>

In the recording method X, the difference in dispersion component between the first ink film and the transport member T1 (that is, the absolute value of the difference between the dispersion component of the surface energy of the first ink film and the dispersion component of the surface energy of the transport member T1) is preferably 2.0 mN/m or more, and more preferably 5.0 mN/m or more.

As a result, the transfer of the first ink film to the transport member T1 can be further suppressed.

The upper limit of the difference in dispersion component between the first ink film and the transport member T1 is not particularly limited, but is, for example, 50.0 mN/m.

From the viewpoint of further suppressing scratches on the first ink film, the difference in hydrogen bonding component between the first ink film and the transport member T1 is preferably 35.0 mN/m or less, and more preferably 30.0 mN/m or less.

Examples of a preferred range of the difference in dispersion component between the first ink film and the transport member T1 include a range of 5.0 mN/m or more and 30.0 mN/m or less.

<Difference in dispersion component between second ink film and transport member T2>

A preferred range of the difference in dispersion component between the second ink film and the transport member T2 is the same as the preferred range of the difference in dispersion component between the first ink film and the transport member T1.

Examples of a combination of the difference in dispersion component between the first ink film and the transport member T1 and the difference in between the second ink film and the transport member T2 include a combination in which the difference in between the first ink film and the transport member T1 is 5.0 mN/m or more and 30.0 mN/m or less and the difference in dispersion component between the second ink film and the transport member T2 is 5.0 mN/m or more and 30.0 mN/m or less.

<Difference in surface roughness between first ink film and transport member T1>

In the recording method X, a difference in surface roughness between the first ink film and the transport member T1 (that is, an absolute value of a difference between a surface roughness of the first ink film and a surface roughness of the transport member T1) is preferably 50.0 μm or less, more preferably 30.0 μm or less, and still more preferably 10.0 μm or less.

In a case where the difference in surface roughness between the first ink film and the transport member T1 is 50.0 μm or less, the transfer of the first ink film to the transport member T1 can be further suppressed.

The lower limit of the difference in surface roughness between the first ink film and the transport member T1 is not particularly limited. The difference in surface roughness between the first ink film and the transport member T1 may be 0 μm, more than 0 μm, 0.1 μm or more, or 1.0 μm or more.

<Difference in surface roughness between second ink film and transport member T2>

A preferred range of the difference in surface roughness between the second ink film and the transport member T2 is the same as the preferred range of the difference in surface roughness between the first ink film and the transport member T1.

Examples of a combination of the difference in surface roughness between the first ink film and the transport member T1 and the difference in surface roughness between the second ink film and the transport member T2 include a combination in which the difference in surface roughness between the first ink film and the transport member T1 is 10.0 μm or less and the difference in surface roughness between the second ink film and the transport member T2 is 10.0 μm or less.

<Pretreatment liquid applying step and the like>

The recording method according to the present disclosure may include, before the first ink applying step, a pretreatment liquid applying step of applying a pretreatment liquid containing water, a coagulating agent, and a resin onto the non-permeable substrate, a pretreatment liquid drying step of drying the pretreatment liquid applied onto the non-permeable substrate to obtain a pretreatment liquid film, and a step of transporting, by a transport member P, the non-permeable substrate provided with the pretreatment liquid film in a disposition in which the transport member P and the pretreatment liquid film are in contact with each other. In this case, from the viewpoint of suppressing streaks in the image due to the transfer of the pretreatment liquid film to the transport member P, a difference in dispersion component between the pretreatment liquid film and the transport member P is 5.0 mN/m or more.

The pretreatment liquid applying step, the pretreatment liquid drying step, and the step of transporting in a disposition in which the transport member P and the pretreatment liquid film are in contact with each other are as described above.

Examples

Hereinafter, the present disclosure will be described in more detail using Examples. However, the present disclosure is not limited to the following examples as long as it does not exceed the gist of the present invention.

[Preparation of pretreatment liquid]

Pretreatment liquids PC1 to PC3, having compositions shown in Table 1, were prepared, respectively.

[Table 1]

| Pretreatment liquid No. | | PC1 | PC2 | PC3 |
|---|---|---|---|---|
| Coagulating agent | Glutaric acid | 4.1 | | 4.1 |
| | Succinic acid | 0.5 | | 0.5 |
| | Calcium acetate | | 6.0 | |
| Resin particles | SUPERFLEX E-4800 | 8.0 | 8.0 | |
| | SUPERFLEX 500M | | | 8.0 |
| Additive | BYK-024 | 0.01 | 0.01 | 0.01 |
| | Dimethylaminoethanol | 0.1 | | 0.1 |
| | OLFINE E1010 | 0.2 | 0.2 | 0.2 |
| Water | | Residual amount | Residual amount | Residual amount |

Numerical values in Table 1 indicate the content (% by mass) with respect to the total amount of the pretreatment liquid, and blank in Table 1 means that the corresponding component was not contained.

In a case where a product is an aqueous dispersion liquid, the content shown in Table 1 indicates the content (% by mass) of the solid content in the aqueous dispersion liquid with respect to the total amount of the pretreatment liquid.
"Residual amount" means a residual amount which is to be 100% by mass in total.
Details of the components in Table 1 are as follows.

· SUPERFLEX E-4800 ... aqueous dispersion liquid of polyurethane resin, manufactured by DKS Co., Ltd.
· SUPERFLEX 500M ... aqueous dispersion liquid of polyurethane resin, manufactured by DKS Co., Ltd.
· BYK-024 ... antifoaming agent manufactured by BYK Chemie
· OLFINE E1010 ... acetylene glycol-based surfactant manufactured by Nissin Chemical Co., Ltd.

[Preparation of ink]

Inks W1 to W4, K1, K2, M1, and C1, each having composition shown in Table 2, were prepared.
The inks W1 to W4 are white inks, the inks K1 and K2 are black inks, the ink M1 is a magenta ink, and the ink C1 is a cyan ink.

[Table 2]

| Ink No. | | W1 | W2 | W3 | W4 | K1 | K2 | M1 | C1 |
|---|---|---|---|---|---|---|---|---|---|
| Pigment and pigment dispersing resin | APD4000C | | | | | | | | 3.0 |
| | APD4000M | | | | | | | 5.5 | |
| | APD4000K | | | | | 4.0 | 4.0 | | |
| | Titanium dioxide pigment | 15.0 | 15.0 | 15.0 | 15.0 | | | | |
| | Pigment dispersing resin 1 | 1.5 | 1.5 | 1.5 | 1.5 | | | | |

(continued)

| Ink No. | | W1 | W2 | W3 | W4 | K1 | K2 | M1 | C1 |
|---|---|---|---|---|---|---|---|---|---|
| Water-soluble organic solvent | PG | 20.0 | 20.0 | 15.0 | | 25.0 | 25.0 | 25.0 | 25.0 |
| | PGmME | 5.0 | 5.0 | 5.0 | 5.0 | | 2.0 | 2.0 | 2.0 |
| | DEGmBE | | | | | | 0.5 | 0.5 | 0.5 |
| | 1,2-BDO | | | 5.0 | 20.0 | | | | |
| Additive | OLFINE E1010 | 0.5 | 0.5 | 1.0 | | 0.5 | 1.5 | 1.5 | 1.5 |
| | BYK-345 | | | | 0.3 | | 0.5 | 0.5 | 0.5 |
| | PVP K-15 | 0.1 | 0.1 | 0.1 | 0.1 | 0.1 | 0.1 | 0.1 | 0.1 |
| | Urea | 1.0 | | | | | | | |
| | Maltose | | 3.0 | | | | | | |
| | SNOWTEX XS | 0.05 | 0.05 | 0.05 | 0.05 | 0.05 | 0.05 | 0.05 | 0.05 |
| Resin particles | NeoCryl A-1091 | 4.0 | 4.0 | 4.0 | 4.0 | 5.0 | 5.0 | 3.0 | 6.0 |
| Water | Residual amount | Residual amount | Residual amount | Residual amount | Residual amount | Residual amount | Residual amount | Residual amount | |

Numerical values in Table 2 indicate the content (% by mass) with respect to the total amount of the ink, and blank in Table 2 means that the corresponding component was not contained.

In a case where a product is an aqueous dispersion liquid, the content shown in Table 2 indicates the content (% by mass) of the solid content in the aqueous dispersion liquid with respect to the total amount of the ink.

"Residual amount" means a residual amount which is to be 100% by mass in total.

Details of the components in Table 2 are as follows.

· APD4000C ... Projet Cyan APD4000 (manufactured by FUJIFILM Imaging Colorants, cyan pigment dispersion liquid, pigment concentration: 20% by mass)

· APD4000M ... Projet Magenta APD4000 (manufactured by FUJIFILM Imaging Colorants, magenta pigment dispersion liquid, pigment concentration: 20% by mass)

· APD4000K ... Projet Black APD4000 (manufactured by FUJIFILM Imaging Colorants, black pigment dispersion liquid, pigment concentration: 15% by mass)

· Titanium dioxide pigment ... "PF-690" manufactured by Ishihara Sangyo Kasha, Ltd. (average primary particle diameter: 210 nm); titanium dioxide pigment in a white pigment dispersion liquid 1 described later

· Pigment dispersing resin 1 ... resin in the white pigment dispersion liquid 1 described later

· PG ... 1,2-propanediol

· PGmME ... propylene glycol monomethyl ether

· DEGmBE ... diethylene glycol monobutyl ether

· 1,2-BDO ... 1,2-butanediol

· OLFINE E1010 ... acetylene glycol-based surfactant manufactured by Nissin Chemical Co., Ltd.

· BYK-345 ... silicone-based surfactant manufactured by BYK Chemie

· PVP-K15 ... polyvinylpyrrolidone manufactured by Ashland Inc.

· SNOWTEX XS ... colloidal silica manufactured by Nissan Chemical Corporation

· NeoCryl A-1091 ... aqueous dispersion liquid of styrene-acrylic resin particles manufactured by Covestro AG

Inks W1 to W4 were prepared using the following white pigment dispersion liquid 1.

<Preparation of white pigment dispersion liquid 1>

(Synthesis of pigment dispersing resin 1)

100 g of dipropylene glycol was charged into a three-neck flask provided with a stirrer and a cooling pipe, and heated to 85°C in a nitrogen atmosphere.

A solution 1 obtained by mixing 14.0 g of stearyl methacrylate, 35.3 g of benzyl methacrylate, 20.0 g of hydroxyethyl methacrylate, 30.7 g of methacrylic acid, and 0.55 g of 2-mercaptopropionic acid and a solution 2 obtained by dissolving 1.0 g of t-butylperoxy-2-ethylhexanoate (product name "Perbutyl O", manufactured by NOF Corporation) in 20 g of dipropylene glycol were respectively prepared.

The solution 1 was added dropwise to the above-described three-neck flask over 4 hours, and the solution 2 was added dropwise thereto over 5 hours.

After the completion of the dropwise addition, the resulting solution was allowed to further react for 2 hours, heated to 95°C, and heated and stirred for 3 hours, so that all unreacted monomers were allowed to react. Disappearance of the monomers was confirmed by a nuclear magnetic resonance ($^1$H-NMR) method.

The obtained reaction solution was heated to 70°C, 12.0 g of dimethylethanolamine was added thereto, propylene glycol was added thereto, and the resulting solution was stirred, thereby obtaining a 30% by mass solution of the pigment dispersing resin 1.

Structural units of the obtained pigment dispersing resin 1 were confirmed by $^1$H-NMR. In addition, a weight-average molecular weight (Mw) determined by GPC was 28,000.

A mass ratio of respective structural units in the pigment dispersing resin 1 was structural unit derived from stearyl methacrylate/structural unit derived from benzyl methacrylate/structural unit derived from hydroxyethyl methacrylate/structural unit derived from methacrylic acid = 14/35.3/20/30.7. Here, the above-described mass ratio was a value not including dimethylaminoethanol.

An acid value of the pigment dispersing resin 1 was 200 mgKOH/g.

(Preparation of white pigment dispersion liquid 1)

A pigment dispersion liquid 1 was prepared using a Lady Mill model LSG-4U-08 (manufactured by Aimex Co., Ltd.).

45 parts by mass of a titanium dioxide pigment (average primary particle diameter: 210 nm, trade name "PF-690", manufactured by Ishihara Sangyo Kasha, Ltd.) as a white pigment, 15 parts by mass of a 30% by mass solution of the pigment dispersing resin 1, and 40 parts by mass of ultrapure water were charged into a zirconia container. Furthermore, 40 parts by mass of 0.5 mmφ zirconia beads (Torayceram beads manufactured by Toray Industries, Inc.) were added thereto, and the mixture was mixed gently using a spatula. The zirconia container containing the obtained mixture was put into the Lady mill, and dispersed at a rotation speed of 1,000 rpm (revolutions per minute) for 5 hours. After the dispersion was completed, the beads were removed by filtration with a gauze, thereby obtaining a white pigment dispersion liquid 1 in which a concentration of the white pigment was 45% by mass.

[Preparation of transport member]

As transport members in an image recording apparatus, transport rollers of types shown in Table 3 were prepared.

[Table 3]

| Type | Detail | Company name |
|---|---|---|
| R1 | White alumite-treated aluminum roller | UNIZONE Co.,Ltd. |
| R2 | Black alumite-treated aluminum roller | UNIZONE Co.,Ltd. |
| R3 | SUS304 roller | Ohmori Chrome CO., LTD. |
| R4 | EPDM roller | KINYOSHA CO., LTD. |
| R5 | Electroless plating-treated SS400 roller | UNIZONE Co.,Ltd. |

[Example 1]

<Preparation of image recording apparatus 10>

In the image recording apparatus 10 according to the first specific example, shown in Fig. 1, an image recording apparatus having a structure in which two ink jet heads are arranged at the position of the ink jet head 32 along the transport direction was prepared.

As the transport rollers 11 to 17 in the image recording apparatus 10, a transport roller R1 shown in Table 3 was used.

As the pretreatment liquid applying device 22, a wire bar coater was used.

As the pretreatment liquid drying device 24, a dryer was used.

As two ink jet heads arranged at the position of the ink jet head 32 (hereinafter, an ink jet head on the upstream side is referred to as a first ink jet head and an ink jet head on the downstream side is referred to as a second ink jet head), piezo full-line heads with a width of 1200 dpi/30 inch width were used.

As the ink drying devices 34 and 36, a dryer was used.

As an ink to be applied from the first ink jet head (hereinafter, referred to as a first ink), the ink K1 was used, as an ink to be applied from the second ink jet head (hereinafter, referred to as the second ink), the ink W1 was used, and as a pretreatment liquid, the pretreatment liquid PC1 was used.

As the non-permeable substrate 20, a polyethylene terephthalate (PET) substrate ("FE2001" manufactured by Futamura Chemical Co., Ltd.; thickness: 12 $\mu$m, width: 780 mm, length: 4,000 m; hereinafter, referred to as "non-permeable substrate A")) was used.

<Image recording>

Image recording was performed in a state in which the non-permeable substrate 20 (that is, the non-permeable substrate A) was continuously transported at a transportation speed of 50 m/min by the transport members (that is, the transport rollers 11 to 17) in the image recording apparatus 10, the pretreatment liquid was applied onto the continuously transported non-permeable substrate A, the pretreatment liquid was dried, the first ink was applied, the second ink was applied, and the ink was dried (that is, the first ink and the second ink were dried) in this order.

Hereinafter, the details will be described.

The pretreatment liquid PC1 was applied onto the non-permeable substrate A to be transported by the pretreatment liquid applying device 22 such that the application amount was approximately 1.7 g/m$^2$, and the applied pretreatment liquid PC1 was dried by the pretreatment liquid drying device 24 at 50°C for 2 seconds to obtain a pretreatment liquid film.

The non-permeable substrate A provided with the pretreatment liquid film was transported to below the ink jet head 32 while bringing the transport roller 14 as the transport member P into contact with the pretreatment liquid film. The ink K1 as the first ink was applied from the first ink jet head in a form of a solid image onto the pretreatment liquid film on the non-permeable substrate A transported to below the ink jet head 32, and the ink W1 as the second ink was applied from the second ink jet head in a form of a solid image onto the applied first ink.

Application conditions of the first ink and the second ink were both as follows.

-Application conditions of ink (common to first ink and second ink)-

Amount of ink jetted from ink jet head: 3.0 picoliters (pL)
Driving frequency: 41 kHz (transportation speed of non-permeable substrate: 50 m/min)

The first ink and the second ink, applied onto the pretreatment liquid film on the non-permeable substrate A, were dried with hot air at 80°C for a total of 30 seconds by the ink drying devices 34 and 36 to obtain an ink film.

The non-permeable substrate A provided with the ink film was transported by the transport roller 17 while bringing the transport roller 16 as the transport member T into contact with the ink film.

In this manner, an image recorded material in which the solid image (that is, the pretreatment liquid film and the ink film) was provided on the non-permeable substrate A was obtained.

<Measurements and evaluations>

With regard to the above-described image recording, the following measurements and evaluations were carried out.

The results are shown in Table 4.

(Measurement of surface energy (hydrogen bonding component and dispersion component) of transport member)

As a representative value of the surface energy (hydrogen bonding component and dispersion component) of the transport member P and the transport member T, a surface energy (hydrogen bonding component and dispersion component) of the transport roller 14 as the transport member P was measured by the above-described method.

The obtained result was defined as the surface energy (hydrogen bonding component and dispersion component) common to the transport member P and the transport member T.

(Measurement of surface roughness of transport member)

As a representative value of the surface roughness of the transport member P and the transport member T, a surface roughness (arithmetic average height Ra specified in JIS B 0601-2001) of the transport roller 14 as the transport member P was measured using a laser microscope (Color 3D laser microscope VK-9710 manufactured by Keyence Corporation).

The obtained result was defined as the surface roughness ($\mu$m) common to the transport member P and the transport member T.

(Measurement of surface energy (hydrogen bonding component and dispersion component) of pretreatment liquid film)

The application and drying of the pretreatment liquid PC1 in the above-described image recording were performed to produce a sample in which the pretreatment liquid film was provided on the non-permeable substrate A.

Within 30 minutes from the sample production, a contact angle of water and a contact angle of diiodomethane on the surface of the pretreatment liquid film in the sample were measured. As a contact angle measuring device, a product name "DM-501" manufactured by Kyowa Interface Science Co., Ltd. was used. From these contact angles, the surface energy (hydrogen bonding component and dispersion component) of the pretreatment liquid film was obtained by the above-described method.

(Calculation of relationship between pretreatment liquid film and transport member P (difference in hydrogen bonding component and difference in dispersion component))

From the above-described measurement results, a relationship between the pretreatment liquid film and the transport member P, that is, the difference in hydrogen bonding component between the pretreatment liquid film and the transport member P and the difference in dispersion component between the pretreatment liquid film and the transport member P were calculated.

(Measurement of surface energy (hydrogen bonding component and dispersion component) of ink film)

In the above-described image recording, only the application of the first ink, the application of the second ink, and the drying of the ink (that is, the drying of the first ink and the drying of the second ink) were performed to produce an ink film sample in which the ink film was provided on the non-permeable substrate A.

Within 30 minutes from the ink film sample production, a contact angle of water and a contact angle of diiodomethane on the surface of the pretreatment liquid film in the ink film sample were measured. As a contact angle measuring device, a product name "DM-501" manufactured by Kyowa Interface Science Co., Ltd. was used. From these contact angles, the surface energy (hydrogen bonding component and dispersion component) of the ink film was obtained by the above-described method.

(Calculation of relationship between ink film and transport member T (difference in hydrogen bonding component and difference in dispersion component))

From the above-described measurement results, a relationship between the ink film and the transport member T, that is, the difference in hydrogen bonding component between the ink film and the transport member T and the difference in dispersion component between the ink film and the transport member T were calculated.

(Measurement of surface roughness of ink film)

A surface roughness (arithmetic average height Ra specified in JIS B 0601-2001) of the surface of the ink film in the above-described ink film sample was measured using a laser microscope (Color 3D laser microscope VK-9710 manufactured by Keyence Corporation).

The obtained result was defined as the surface roughness ($\mu$m) of the ink film.

(Calculation of difference in surface roughness between ink film and transport member T)

From the above-described measurement results, the difference in surface roughness between the ink film and the transport member T was calculated.

(Transferring of ink film)

The recording of the solid image described above was performed for 100 m in terms of the length of the non-permeable substrate A.

Next, the surface of the transport roller 16 as the transport member T in the image recording apparatus 10 was visually observed, and transferring of the ink film to the transport member was evaluated based on the following evaluation standard.

In the following evaluation standard, the rank in which the transferring of the ink film to the transport member was most suppressed is 5.

-Evaluation standard for transferring of ink film-

5: no contamination due to the transferring of the ink film was confirmed at all on the surface of the transport roller.
4: slight contamination due to the transferring of the ink film was confirmed on the surface of the transport roller.
3: contamination due to the transferring of the ink film was confirmed at one location on the surface of the transport roller.
2: contamination due to the transferring of the ink film was confirmed at a plurality of locations on the surface of the transport roller.
1: contamination due to the transferring of the ink film was confirmed on the entire surface of the transport roller.

(Streaks in image)

The recording of the solid image described above was performed for 100 m in terms of the length of the non-permeable substrate A. That is, the length of the recorded solid image (that is, the dimension of the solid image in the length direction of the non-permeable substrate A) was 100 m. A width of the solid image (that is, a dimension of the solid image in the width direction of the non-permeable substrate A) was set to 70 cm.

In the solid image, a region near the end point of the image recording was visually observed, and streaks in the image were evaluated based on the following evaluation standard.

The streaks in the image are defects caused by the transferring of the pretreatment liquid film to the transport member P (that is, the transport roller 14).

In the following evaluation standard, the rank in which the streaks in the image (that is, the transferring of the pretreatment liquid film to the transport member P) were most suppressed is 5.

-Evaluation Standard for streaks in image-

5: no streak having a length of 10 cm or more was confirmed in the image.
4: one streak having a length of 10 cm or more was confirmed in a square region of 70 cm × 70 cm in the image.
3: two or three streaks having a length of 10 cm or more were confirmed in a square region of 70 cm × 70 cm in the image.
2: four or five streaks having a length of 10 cm or more were confirmed in a square region of 70 cm × 70 cm in the image.
1: six or more streaks having a length of 10 cm or more were confirmed in a square region of 70 cm × 70 cm in the image.

(Scratch of ink film)

A production of the ink film sample was carried out on the non-permeable substrate having a length of 100 m. That is, the length of the formed ink film (that is, the dimension of the ink film in the length direction of the non-permeable substrate A) was 100 m. A width of the ink film (that is, a dimension of the ink film in the width direction of the non-permeable substrate A) was set to 70 cm.

In the ink film, the vicinity of a portion finally formed was visually observed, and scratches of the image were evaluated based on the following evaluation standard.

In the following evaluation standard, the rank in which the scratches of the ink film were most suppressed is 5.

-Evaluation standard for scratch of ink film-

5: no scratch having a length of 10 cm or more was confirmed in the ink film.

4: one scratch having a length of 10 cm or more was confirmed in a square region of 70 cm × 70 cm in the ink film.

3: two or three scratches having a length of 10 cm or more were confirmed in a square region of 70 cm × 70 cm in the ink film.

2: four or five scratches having a length of 10 cm or more were confirmed in a square region of 70 cm × 70 cm in the ink film.

1: six or more scratches having a length of 10 cm or more were confirmed in a square region of 70 cm × 70 cm in the ink film.

[Examples 2 to 21 and Comparative Example 1]

The same operations as in Example 1 were carried out, except that the combination of all transport members in the image recording apparatus 10, the type of the pretreatment liquid, and the type of the ink were changed as shown in Table 4.

The results are shown in Table 4.

[Table 4]

| | Transport member (common to P and T) | | | Pretreatment liquid | | | First ink | Second ink | Surface energy of ink film | | | Relationship between pretreatment liquid film and transport member P | | Relationship between ink film and transport member T | | | Evaluation result | | |
|---|---|---|---|---|---|---|---|---|---|---|---|---|---|---|---|---|---|---|---|
| | Type | Surface energy | | Surface roughness | Type | Surface energy of pretreatment liquid film | | Type | Type | Dispersion component | Hydrogen bonding component | Surface roughness of ink film | Difference in hydrogen bonding component | Difference in dispersion component | Difference in hydrogen bonding component | Difference in dispersion component | Difference in surface roughness | Transferring | Streaks | Scratches |
| | | Dispersion component | Hydrogen bonding component | | | Dispersion component | Hydrogen bonding component | | | | | | | | | | | | | |
| Example 1 | R1 | 25.5 | 0.4 | 5.7 | PC1 | 33.8 | 37.7 | K1 | W1 | 36.4 | 6.6 | 0.2 | 37.3 | 8.3 | 6.2 | 10.9 | 5.5 | 4 | 5 | 5 |
| Example 2 | R2 | 41.6 | 0.8 | 3.3 | PC1 | 33.8 | 37.7 | K1 | W1 | 36.4 | 6.6 | 0.2 | 36.9 | 7.8 | 5.8 | 5.2 | 3.1 | 4 | 5 | 5 |
| Example 3 | R3 | 28.6 | 0.8 | 3.2 | PC1 | 33.8 | 37.7 | K1 | W1 | 36.4 | 6.6 | 0.2 | 36.9 | 5.2 | 5.8 | 7.8 | 3.0 | 4 | 5 | 5 |
| Example 4 | R4 | 13.5 | 0.2 | 48.5 | PC1 | 33.8 | 37.7 | K1 | W1 | 36.4 | 6.6 | 0.2 | 37.5 | 20.3 | 6.4 | 22.9 | 48.3 | 3 | 5 | 5 |
| Example 5 | R1 | 25.5 | 0.4 | 5.7 | PC1 | 33.8 | 37.7 | K1 | W2 | 32.3 | 26.4 | 0.2 | 37.3 | 8.3 | 26.0 | 6.8 | 5.5 | 5 | 5 | 5 |
| Example 6 | R2 | 41.6 | 0.8 | 3.3 | PC1 | 33.8 | 37.7 | K1 | W2 | 32.3 | 26.4 | 0.2 | 36.9 | 7.8 | 25.6 | 9.3 | 3.1 | 5 | 5 | 5 |
| Example 7 | R3 | 28.6 | 0.8 | 3.2 | PC1 | 33.8 | 37.7 | K1 | W2 | 32.3 | 26.4 | 0.2 | 36.9 | 5.2 | 25.6 | 3.7 | 3.0 | 4 | 5 | 5 |
| Example 8 | R4 | 13.5 | 0.2 | 48.5 | PC1 | 33.8 | 37.7 | K1 | W2 | 32.3 | 26.4 | 0.2 | 37.5 | 20.3 | 26.2 | 18.8 | 48.3 | 4 | 5 | 5 |
| Example 9 | R5 | 27.6 | 5.6 | 3.0 | PC1 | 33.8 | 37.7 | K1 | W2 | 32.3 | 26.4 | 0.2 | 32.1 | 6.2 | 20.8 | 4.7 | 2.8 | 4 | 5 | 5 |
| Example 10 | R1 | 25.5 | 0.4 | 5.7 | PC1 | 33.8 | 37.7 | K1 | W3 | 34.3 | 12.4 | 0.2 | 37.3 | 8.3 | 12.0 | 8.8 | 5.4 | 5 | 5 | 5 |
| Example 11 | R2 | 41.6 | 0.8 | 3.3 | PC1 | 33.8 | 37.7 | K1 | W3 | 34.3 | 12.4 | 0.2 | 36.9 | 7.8 | 11.6 | 7.3 | 3.1 | 5 | 5 | 5 |
| Example 12 | R3 | 28.6 | 0.8 | 3.2 | PC1 | 33.8 | 37.7 | K1 | W3 | 34.3 | 12.4 | 0.2 | 36.9 | 5.2 | 11.6 | 5.7 | 3.0 | 5 | 5 | 5 |
| Example 13 | R4 | 13.5 | 0.2 | 48.5 | PC1 | 33.8 | 37.7 | K1 | W3 | 34.3 | 12.4 | 0.2 | 37.5 | 20.3 | 12.2 | 20.8 | 48.3 | 4 | 5 | 5 |
| Example 14 | R5 | 27.6 | 5.6 | 3.0 | PC1 | 33.8 | 37.7 | K1 | W3 | 34.3 | 12.4 | 0.2 | 32.1 | 6.2 | 6.8 | 6.7 | 2.8 | 4 | 5 | 5 |
| Example 15 | R1 | 25.5 | 0.4 | 5.7 | PC1 | 33.8 | 37.7 | K1 | W4 | 44.0 | 33.6 | 0.1 | 37.3 | 8.3 | 33.2 | 18.5 | 5.5 | 5 | 5 | 4 |
| Example 16 | R2 | 41.6 | 0.8 | 3.3 | PC1 | 33.8 | 37.7 | K1 | W4 | 44.0 | 33.6 | 0.1 | 36.9 | 7.8 | 32.8 | 2.4 | 3.2 | 4 | 5 | 4 |
| Example 17 | R3 | 28.6 | 0.8 | 3.2 | PC1 | 33.8 | 37.7 | K1 | W4 | 44.0 | 33.6 | 0.1 | 36.9 | 5.2 | 32.8 | 15.4 | 3.1 | 5 | 5 | 4 |
| Example 18 | R4 | 13.5 | 0.2 | 48.5 | PC1 | 33.8 | 37.7 | K1 | W4 | 44.0 | 33.6 | 0.1 | 37.5 | 20.3 | 33.4 | 30.5 | 48.4 | 4 | 5 | 3 |
| Example 19 | R5 | 27.6 | 5.6 | 3.0 | PC1 | 33.8 | 37.7 | K1 | W4 | 44.0 | 33.6 | 0.1 | 32.1 | 6.2 | 28.0 | 16.4 | 2.9 | 5 | 5 | 5 |
| Example 20 | R2 | 41.6 | 0.8 | 3.3 | PC2 | 38.3 | 36.5 | K1 | W1 | 36.4 | 6.6 | 0.2 | 35.7 | 3.3 | 5.8 | 5.2 | 3.1 | 4 | 3 | 5 |
| Example 21 | R3 | 28.6 | 0.8 | 3.2 | PC3 | 31.3 | 41.4 | K1 | W1 | 36.4 | 6.6 | 0.2 | 40.6 | 2.7 | 5.8 | 7.8 | 3.0 | 4 | 3 | 5 |
| Comparative Example 1 | R5 | 27.6 | 5.6 | 3.0 | PC1 | 33.8 | 37.7 | K1 | W1 | 36.4 | 6.6 | 0.2 | 32.1 | 6.2 | 1.0 | 8.8 | 2.8 | 1 | 5 | 5 |

In Table 4 and Table 5 below, the unit of the surface roughness and the difference in surface roughness is $\mu$m, and the unit of the dispersion component of the surface energy, the hydrogen bonding component of the surface energy, the difference in dispersion component, and the difference in hydrogen bonding component is mN/m.

As shown in Table 4, in Examples 1 to 21 in which the difference in hydrogen bonding component between the ink film and the transportation member T was 2.0 mN/m or more, the transferring of the ink film to the transport roller was suppressed.

On the other hand, in Comparative Example 1 in which the difference in hydrogen bonding component between the ink film and the transport member T was less than 2.0 mN/m, the transferring of the ink film to the transport roller was remarkable.

From the results of Examples 1 to 6, it was found that, in a case where the difference in hydrogen bonding component between the ink film and the transport member T was 10.0 mN/m or more (Examples 5 and 6), the transferring of the ink film to the transport roller was further suppressed.

From the results of Examples 5, 6, and 15 to 17, it was found that, in a case where the difference in hydrogen bonding component between the ink film and the transport member T was 30.0 mN/m or less (Examples 5 and 6), the scratches of the ink film were further suppressed.

From the results of Examples 5 to 7, it was found that, in a case where the difference in dispersion component between the ink film and the transport member T was 5.0 mN/m or more (Examples 5 and 6), the transferring of the ink film to the transport roller was further suppressed.

From the results of Examples 5, 6, and 18, it was found that, in a case where the difference in dispersion component between the ink film and the transport member T was 30.0 mN/m or less (Examples 5 and 6), the scratches of the ink film were further suppressed.

From the results of Examples 4 to 6, 8, 13, and 18, it was found that, in a case where the difference in surface roughness between the ink film and the transport member T was 10 $\mu$m or less (Examples 5 and 6), the transferring of the ink film to the transport roller was further suppressed.

From the results of Examples 5, 6, 20, and 21, it was found that, in a case where the difference in dispersion component between the pretreatment liquid film and the transport member P was 5.0 mN/m or more (Examples 5 and 6), the streaks in the image were further suppressed.

[Example 101]

<Preparation of image recording apparatus 100>

An image recording apparatus 100 according to the second specific example, shown in Fig. 2, was prepared.

As the transport rollers 11 to 14 and 115 to 122 in the image recording apparatus 100, a transport roller R1 shown in Table 3 was used.

As the pretreatment liquid applying device 22, a wire bar coater was used.

As the pretreatment liquid drying device 24, a dryer was used.

As the first ink jet head 132 and the second inkjet head 142, piezo full-line heads with a width of 1200 dpi/30 inch width were used.

As the first ink drying devices 134 and 136 and the second ink drying devices 144 and 146, a dryer was used.

As a treatment liquid, the pretreatment liquid PC1 was used, as a first ink, the ink K1 was used, and as a second ink, the ink W1 was used.

As the non-permeable substrate 20, the same PET substrate (non-permeable substrate A) as in Example 1 was used.

<Image recording>

Image recording was performed in a state in which the non-permeable substrate 20 (that is, the non-permeable substrate A) was continuously transported at a transportation speed of 50 m/min by the transport members (that is, the transport rollers 11 to 14 and 115 to 122) in the image recording apparatus 100, the pretreatment liquid was applied onto the continuously transported non-permeable substrate A, the pretreatment liquid was dried, the first ink was applied, the first ink was dried, the second ink was applied, and the second ink was dried in this order.

Hereinafter, the details will be described.

The pretreatment liquid PC1 was applied onto the non-permeable substrate A to be transported by the pretreatment liquid applying device 22 such that the application amount was approximately 1.7 g/m$^2$, and the applied pretreatment liquid PC1 was dried by the pretreatment liquid drying device 24 at 50°C for 2 seconds to obtain a pretreatment liquid film.

The non-permeable substrate A provided with the pretreatment liquid film was transported to below the first ink jet head 132 while bringing the transport roller 14 as the transport member P into contact with the pretreatment liquid film.

The ink K1 as the first ink was applied from the ink jet head 132 onto the pretreatment liquid film on the non-permeable substrate A transported to below the first ink jet head 132 in a form of a solid image.

Application conditions of the first ink were as follows.

-Application conditions of first ink-

Amount of first ink jetted from first ink jet head: 3.0 pL
Driving frequency: 41 kHz (transportation speed of non-permeable substrate: 50 m/min)

Next, the ink K1 as the first ink applied onto the pretreatment liquid film on the non-permeable substrate A was dried with hot air at 80°C for a total of 30 seconds by the first ink drying devices 134 and 136 to obtain a first ink film.

Next, the non-permeable substrate A provided with the first ink film was transported while bringing the transport roller 116 as the transport member T1 into contact with the first ink film, and then transported to below the second ink jet head 142 by the transport rollers 117 to 119.

The ink W1 as the second ink was applied from the second ink jet head 142 onto the first ink film on the non-permeable substrate A transported to below the second ink jet head 142 in a form of a solid image.

Application conditions of the second ink were the same as the application conditions of the first ink.

Next, the ink W1 as the second ink applied onto the first ink film on the non-permeable substrate A was dried with hot air at 80°C for a total of 30 seconds by the second ink drying devices 144 and 146 to obtain a second ink film.

Next, the non-permeable substrate A provided with the second ink film was transported by the transport roller 122 while bringing the transport roller 121 as the transport member T2 into contact with the second ink film.

In this manner, an image recorded material in which the solid image (that is, the pretreatment liquid film, the first ink film, and the second ink) was provided on the non-permeable substrate A was obtained.

<Measurements and evaluations>

With regard to the above-described image recording, the same measurements and evaluations as in Example 1 were carried out.

The results are shown in Table 5.

The measurements regarding the ink of Example 1 were performed for each of the first ink and the second ink.

A relationship between the first ink and the transport member T1 (difference in hydrogen bonding component, difference in dispersion component, and difference in surface roughness) and a relationship between the second ink and the transport member T2 (difference in hydrogen bonding component, difference in dispersion component, and difference in surface roughness) were obtained by the same methods as the relationship between the ink and the transport member T (difference in hydrogen bonding component, difference in dispersion component, and difference in surface roughness) in Example 1.

The transferring of the first ink film and the transferring of the second ink film were evaluated in the same manner as in the transferring of the ink film in Example 1.

The scratches of the first ink film and the scratches of the second ink film were evaluated in the same manner as in the scratches of the ink film in Example 1.

For the streaks in the image, an image recorded material in which the solid image (that is, the pretreatment liquid film, the first ink film, and the second ink) was provided on the non-permeable substrate A was used for evaluation.

[Table 5]

| | Transport member (common to P, T1, and T2) | | | | Pretreatment liquid | | | First ink | | | | Second ink | | | | Relationship between pretreatment liquid film and transport member P | | Relationship between first ink film and transport member T1 | | | Relationship between second ink film and transport member T2 | | | Evaluation result | | | | |
| | Type | Surface energy | | Surface roughness | Type | Surface energy of pretreatment liquid film | | Type | Surface energy of first ink film | | Surface roughness of first ink film | Type | Surface energy of second ink film | | Surface roughness of second ink film | Differnce in hydrogen bonding component | Differnce in dispersion component | Differnce in hydrogen bonding component | Differnce in dispersion component | Differnce in surface roughness | Differnce in hydrogen bonding component | Differnce in dispersion component | Differnce in surface roughness | Transferring of first ink film | Transferring of second ink film | Streaks | Scratches of first ink film | Scratches of second ink film |
| | | Dispersion component | Hydrogen bonding component | | | Dispersion component | Hydrogen bonding component | | Dispersion component | Hydrogen bonding component | | | Dispersion component | Hydrogen bonding component | | | | | | | | | | | | | | | |
| Example 101 | R1 | 25.5 | 0.4 | 5.7 | PC1 | 33.8 | 37.7 | K1 | 33.1 | 26.4 | 0.1 | W1 | 37.1 | 6.6 | 0.2 | 37.3 | 8.3 | 26.0 | 7.6 | 5.6 | 6.2 | 11.6 | 5.5 | 5 | 4 | 5 | 5 | 5 |
| Example 102 | R2 | 41.6 | 0.8 | 3.3 | PC1 | 33.8 | 37.7 | K1 | 33.1 | 26.4 | 0.1 | W1 | 37.1 | 6.6 | 0.2 | 36.9 | 7.8 | 25.6 | 8.5 | 3.2 | 5.8 | 4.5 | 3.1 | 5 | 3 | 5 | 5 | 5 |
| Example 103 | R3 | 28.6 | 0.8 | 3.2 | PC1 | 33.8 | 37.7 | K1 | 33.1 | 26.4 | 0.1 | W1 | 37.1 | 6.6 | 0.2 | 36.9 | 5.2 | 25.6 | 4.5 | 3.1 | 5.8 | 8.5 | 3.0 | 4 | 4 | 5 | 5 | 5 |
| Example 104 | R4 | 13.5 | 0.2 | 48.5 | PC1 | 33.8 | 37.7 | K1 | 33.1 | 26.4 | 0.1 | W1 | 37.1 | 6.6 | 0.2 | 37.5 | 20.3 | 26.2 | 19.6 | 48.4 | 6.4 | 23.6 | 48.3 | 4 | 3 | 5 | 5 | 5 |
| Example 105 | R1 | 25.5 | 0.4 | 5.7 | PC1 | 33.8 | 37.7 | K2 | 45.3 | 12.0 | 0.1 | W1 | 37.1 | 6.6 | 0.2 | 37.3 | 8.3 | 11.6 | 19.8 | 5.6 | 6.2 | 11.6 | 5.5 | 5 | 4 | 5 | 5 | 5 |
| Example 106 | R1 | 25.5 | 0.4 | 5.7 | PC1 | 33.8 | 37.7 | M1 | 38.9 | 7.5 | 0.1 | W1 | 37.1 | 6.6 | 0.2 | 37.3 | 8.3 | 7.1 | 13.4 | 5.5 | 6.2 | 11.6 | 5.5 | 4 | 4 | 5 | 5 | 5 |
| Example 107 | R1 | 25.5 | 0.4 | 5.7 | PC1 | 33.8 | 37.7 | C1 | 44.0 | 33.6 | 0.1 | W1 | 37.1 | 6.6 | 0.2 | 37.3 | 8.3 | 33.2 | 18.5 | 5.6 | 6.2 | 11.6 | 5.5 | 5 | 4 | 5 | 4 | 5 |
| Example 108 | R4 | 13.5 | 0.2 | 48.5 | PC1 | 33.8 | 37.7 | C1 | 44.0 | 33.6 | 0.1 | W1 | 37.1 | 6.6 | 0.2 | 37.5 | 20.3 | 33.4 | 30.5 | 48.4 | 6.4 | 23.6 | 48.3 | 4 | 3 | 5 | 3 | 5 |
| Comparative Example 101 | R5 | 27.6 | 5.6 | 3.0 | PC1 | 33.8 | 37.7 | M1 | 38.9 | 7.5 | 0.1 | W1 | 37.1 | 6.6 | 0.2 | 32.1 | 6.2 | 1.9 | 11.3 | 2.9 | 1.0 | 9.5 | 2.8 | 1 | 1 | 5 | 5 | 5 |

As shown in Table 5, in Examples 101 to 108 in which the difference in hydrogen bonding component between the first ink film and the transport member T1 was 2.0 mN/m or more and the difference in hydrogen bonding component between the second ink film and the transport member T2 was 2.0 mN/m or more, the transferring of the ink film to the transport roller was suppressed.

The disclosure of JP2022-069381 filed on April 20, 2022 is incorporated in the present specification by reference.

All documents, patent applications, and technical standards described in the present specification are herein incorporated by reference to the same extent that each individual document, patent application, or technical standard was specifically and individually indicated to be incorporated by reference.

**Claims**

1. An image recording method comprising:

   an ink applying step of applying an ink containing water, a pigment, and a resin onto a non-permeable substrate by an ink jet method;
   an ink drying step of drying the ink applied onto the non-permeable substrate to obtain an ink film; and
   a step of transporting, by a transport member T, the non-permeable substrate provided with the ink film in a disposition in which the transport member T and the ink film are in contact with each other,
   wherein an absolute value of a difference between a hydrogen bonding component of a surface energy of the ink film and a hydrogen bonding component of a surface energy of the transport member T is 2.0 mN/m or more.

2. The image recording method according to claim 1,
   wherein the absolute value of the difference between the hydrogen bonding component of the surface energy of the ink film and the hydrogen bonding component of the surface energy of the transport member T is 10.0 mN/m or more and 30.0 mN/m or less.

3. The image recording method according to claim 1,
   wherein an absolute value of a difference between a dispersion component of the surface energy of the ink film and a dispersion component of the surface energy of the transport member T is 5.0 mN/m or more and 30.0 mN/m or less.

4. The image recording method according to claim 1,
   wherein an absolute value of a difference between a surface roughness of the ink film and a surface roughness of the transport member T is 10.0 $\mu$m or less.

5. The image recording method according to claim 1,
   wherein the ink is a white ink containing water, a white pigment, and a resin.

6. The image recording method according to claim 1,

   wherein the ink applying step is a step of applying, onto the non-permeable substrate, a first ink containing water, a pigment, and a resin and a second ink containing water, a pigment, and a resin by an ink jet method in a superimposed manner in this order,
   the ink drying step is a step of drying the first ink and the second ink applied onto the non-permeable substrate to obtain an ink film,
   the first ink is a colored ink containing water, a coloring pigment, and a resin, and
   the second ink is a white ink containing water, a white pigment, and a resin.

7. The image recording method according to any one of claims 1 to 6, further comprising, before the ink applying step:

   a pretreatment liquid applying step of applying a pretreatment liquid containing water, a coagulating agent, and a resin onto the non-permeable substrate;
   a pretreatment liquid drying step of drying the pretreatment liquid applied onto the non-permeable substrate to obtain a pretreatment liquid film; and
   a step of transporting, by a transport member P, the non-permeable substrate provided with the pretreatment liquid film in a disposition in which the transport member P and the pretreatment liquid film are in contact with each other,
   wherein an absolute value of a difference between a dispersion component of a surface energy of the pretreatment liquid film and a dispersion component of a surface energy of the transport member P is 5.0 mN/m or more.

8. An image recording method comprising:

a first ink applying step of applying a first ink containing water, a pigment, and a resin onto a non-permeable substrate by an ink jet method;
a first ink drying step of drying the first ink applied onto the non-permeable substrate to obtain a first ink film;
a first transporting step of transporting, by a transport member T1, the non-permeable substrate provided with the first ink film in a disposition in which the transport member T1 and the first ink film are in contact with each other;
a second ink applying step of applying a second ink containing water, a pigment, and a resin onto the first ink film on the non-permeable substrate which has been transported by the transport member T1, by an ink jet method;
a second ink drying step of drying the second ink applied onto the first ink film on the non-permeable substrate to obtain a second ink film; and
a second transporting step of transporting, by a transport member T2, the non-permeable substrate provided with the second ink film in a disposition in which the transport member T2 and the second ink film are in contact with each other,
wherein an absolute value of a difference between a hydrogen bonding component of a surface energy of the first ink film and a hydrogen bonding component of a surface energy of the transport member T1 is 2.0 mN/m or more,
an absolute value of a difference between a hydrogen bonding component of a surface energy of the second ink film and a hydrogen bonding component of a surface energy of the transport member T2 is 2.0 mN/m or more,
the first ink is a colored ink containing water, a coloring pigment, and a resin, and
the second ink is a white ink containing water, a white pigment, and a resin.

9. The image recording method according to claim 8,

wherein the absolute value of the difference of the hydrogen bonding component of the surface energy of the first ink film and the hydrogen bonding component of the surface energy of the transport member T1 is 10.0 mN/m or more and 30.0 mN/m or less, and
the absolute value of the difference of the hydrogen bonding component of the surface energy of the second ink film and the hydrogen bonding component of the surface energy of the transport member T2 is 10.0 mN/m or more and 30.0 mN/m or less.

10. The image recording method according to claim 8,

wherein an absolute value of a difference of a dispersion component of the surface energy of the first ink film and a dispersion component of the surface energy of the transport member T1 is 5.0 mN/m or more and 30.0 mN/m or less, and
an absolute value of a difference of a dispersion component of the surface energy of the second ink film and a dispersion component of the surface energy of the transport member T2 is 5.0 mN/m or more and 30.0 mN/m or less.

11. The image recording method according to claim 8,

wherein an absolute value of a difference between a surface roughness of the first ink film and a surface roughness of the transport member T1 is 10.0 $\mu$m or less, and
an absolute value of a difference between a surface roughness of the second ink film and a surface roughness of the transport member T2 is 10.0 $\mu$m or less.

12. The image recording method according to any one of claims 8 to 11, further comprising, before the first ink applying step:

a pretreatment liquid applying step of applying a pretreatment liquid containing water, a coagulating agent, and a resin onto the non-permeable substrate;
a pretreatment liquid drying step of drying the pretreatment liquid applied onto the non-permeable substrate to obtain a pretreatment liquid film; and
a step of transporting, by a transport member P, the non-permeable substrate provided with the pretreatment liquid film in a disposition in which the transport member P and the pretreatment liquid film are in contact with each other,

wherein an absolute value of a difference between a dispersion component of a surface energy of the pretreatment liquid film and a dispersion component of a surface energy of the transport member P is 5.0 mN/m or more.

# FIG. 1

# FIG. 2

## INTERNATIONAL SEARCH REPORT

| International application No. |
|---|
| **PCT/JP2023/013018** |

### A. CLASSIFICATION OF SUBJECT MATTER

*B41M 5/00*(2006.01)i; *B41J 2/01*(2006.01)i; *B41J 2/21*(2006.01)i; *C09D 11/322*(2014.01)i
FI:   B41M5/00 100; B41M5/00 120; B41M5/00 132; B41J2/01 125; B41J2/01 123; B41J2/21; C09D11/322

According to International Patent Classification (IPC) or to both national classification and IPC

### B. FIELDS SEARCHED

Minimum documentation searched (classification system followed by classification symbols)

B41M5/00; B41J2/01; B41J2/21; C09D11/322

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-044752 A (CANON INC.) 26 March 2020 (2020-03-26) | 1, 4-8, 11-12 |
|   | claims, paragraphs [0011]-[0017], [0022]-[0060] |   |
| A |   | 2-3, 9-10 |
| A | JP 2021-154658 A (FUJIFILM CORP.) 07 October 2021 (2021-10-07) | 1-12 |
|   | paragraphs [0056], [0059] |   |
| A | JP 2020-73665 A (RICOH CO., LTD.) 14 May 2020 (2020-05-14) | 1-12 |
| A | JP 2013-119445 A (FUJIFILM CORP.) 17 June 2013 (2013-06-17) | 1-12 |
| A | JP 2005-53663 A (RICOH CO., LTD.) 03 March 2005 (2005-03-03) | 1-12 |
| A | JP 2007-210692 A (FUJI XEROX CO., LTD.) 23 August 2007 (2007-08-23) | 1-12 |
| A | WO 2021/186844 A1 (FUJIFILM CORP.) 23 September 2021 (2021-09-23) | 1-12 |
| A | JP 2015-100927 A (RICOH CO., LTD.) 04 June 2015 (2015-06-04) | 1-12 |

☑ Further documents are listed in the continuation of Box C.      ☑ See patent family annex.

\* Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| **21 April 2023** | **09 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** |   |
|   | Telephone No. |

Form PCT/ISA/210 (second sheet) (January 2015)

EP 4 512 629 A1

**INTERNATIONAL SEARCH REPORT**

International application No.

**PCT/JP2023/013018**

**C.    DOCUMENTS CONSIDERED TO BE RELEVANT**

| Category* | Citation of document, with indication, where appropriate, of the relevant passages | Relevant to claim No. |
|---|---|---|
| A | JP 2021-187569 A (RICOH CO., LTD.) 13 December 2021 (2021-12-13) | 1-12 |

Form PCT/ISA/210 (second sheet) (January 2015)

INTERNATIONAL SEARCH REPORT
Information on patent family members

International application No.

**PCT/JP2023/013018**

| Patent document cited in search report | | | Publication date (day/month/year) | Patent family member(s) | | | Publication date (day/month/year) |
|---|---|---|---|---|---|---|---|
| JP | 2020-044752 | A | 26 March 2020 | (Family: none) | | | |
| JP | 2021-154658 | A | 07 October 2021 | (Family: none) | | | |
| JP | 2020-73665 | A | 14 May 2020 | JP | 2017-2272 | A | |
| | | | | US | 2018/0127610 | A1 | |
| | | | | US | 2019/0345356 | A1 | |
| | | | | WO | 2016/199391 | A1 | |
| | | | | EP | 3543297 | A1 | |
| | | | | CN | 107922769 | A | |
| JP | 2013-119445 | A | 17 June 2013 | (Family: none) | | | |
| JP | 2005-53663 | A | 03 March 2005 | US | 2006/0050124 | A1 | |
| | | | | WO | 2005/026029 | A1 | |
| | | | | KR | 10-2005-0057621 | A | |
| | | | | CN | 1705602 | A | |
| JP | 2007-210692 | A | 23 August 2007 | (Family: none) | | | |
| WO | 2021/186844 | A1 | 23 September 2021 | US | 2022/0379648 | A1 | |
| | | | | CN | 115135502 | A | |
| JP | 2015-100927 | A | 04 June 2015 | (Family: none) | | | |
| JP | 2021-187569 | A | 13 December 2021 | WO | 2021/240259 | A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013049519 A
- JP 2002012607 A
- JP 2002188025 A
- JP 2003026978 A
- JP 2003342503 A
- WO 2021221069 A
- JP 2015025076 A

- WO 2021192720 A
- JP 54059936 A
- JP S5459936 A
- JP 2003306623 A
- WO 2020195360 A
- JP 2022069381 A

**Non-patent literature cited in the description**

- **D. K. OWENS** ; **R. C. WENDT**. *Journal of applied polymer science*, 1969, vol. 13, 1741-1747

- Industrial Organic Pigments. **W. HERBST** ; **K. HUNGER**. Encyclopedia of Pigments. 2000